# EUROPÄISCHE PATENTSCHRIFT

(11) **EP 2 232 841 B1**
(45) Veröffentlichungstag und Bekanntmachung des Hinweises auf die Patenterteilung: **04.10.2017**
(21) Anmeldenummer: 08870564.5
(22) Anmeldetag: 11.11.2008
(51) Int. Cl.: H04M 11/06, H04L 5/00, H04L 5/14

(54) **DSL-VERFAHREN MIT VARIABLER UPLOAD-/DOWNLOADBITRATE UND APPLIKATIONSSPEZIFISCHER, DYNAMISCHER PROFILUMSCHALTUNG**
DSL METHOD HAVING VARIABLE UPLOAD/DOWNLOAD BIT RATE AND APPLICATION-SPECIFIC DYNAMIC PROFILE SWITCHING
PROCÉDÉ DSL À DÉBIT BINAIRE DE TÉLÉCHARGEMENT AMONT/AVAL VARIABLE, ET COMMUTATION DE PROFIL DYNAMIQUE, SPÉCIFIQUE À L'APPLICATION

(30) Priorität: 19.01.2008 DE 102008005290
(43) Veröffentlichungstag der Anmeldung: 29.09.2010
(73) Patentinhaber: Deutsche Telekom AG, 53113 Bonn (DE)
(72) Erfinder: KELLER, Walter, 40880 Ratingen (DE)
(74) Vertreter: Cohausz Hannig Borkowski Wißgott
(86) Internationale Anmeldenummer: PCT/EP2008/009488
(87) Internationale Veröffentlichungsnummer: WO 2009/089859

(56) Entgegenhaltungen:
- WO-A-00/39977
- WO-A-99/65218
- US-A- 6 167 095

## Beschreibung

Die vorliegende Erfindung betrifft ein Verfahren zur Anpassung von Upload- und Download- Datenübertragungsrate einer DSL- Verbindung innerhalb, zwischen, und/ oder im Anschluss an Telekommunikations- oder Datennetze, insbesondere zwischen einem teilnehmerseitigen Modem und einer Gegenstelle einer Vermittlungsstelle, wobei die Datenübertragung innerhalb eines in Übertragungskanäle unterteilten Frequenzbereichs einer bestimmten Gesamtbandbreite erfolgt und eine erste Gruppe von konsekutiv oder beliebig angeordneten Übertragungskanälen der Upload-Datenübertragung und eine weitere Gruppe von ebenfalls konsekutiv oder beliebig angeordneten Übertragungskanälen der Download-Datenübertragung zugeordnet ist und die Summe der Übertragungskanäle beider Gruppen der Gesamtanzahl der für die Datenübertragung zur Verfügung stehender Übertragungskanäle entspricht.

Für die heutige Breitband-Telekommunikation werden unterschiedliche standardisierte DSL-Verfahren (Digital Subscriber Line) verwendet, die die Anforderungen des Anwenders hinsichtlich der Datenübertragungsgeschwindigkeit zu befriedigen versuchen. Weit verbreitet und in zunehmendem Maße Verbreitung finden insbesondere asymmetrische DSL-Verfahren (ADSL) wie beispielsweise ADSL, ADSL2, ADSL2plus, ADSL4, VDSL oder VDSL2, die in genannter Reihenfolge zunehmend höhere Downloadgeschwindigkeiten ermöglichen. Ein Drang zu immer höherer Download-Bandbreite resultiert aus den zunehmend breitbandigeren Anwendungen. Einfache Internetseiten sind heute zunehmend mit multimedialen Inhalten behaftet, bunt und mit vielen Grafiken, Ton oder Musik, Animationen etc. ausgestattet. Elektronische Post (E-Mail) beinhaltet oft umfangreiche Bilder, Video- und Audiosequenzen. Daneben existieren Internet-Radio und Internet Fernsehen (IP-TV auch HDTV). Digitale Videotheken (VoD, Video on Demand) sind ebenfalls in Diskussion. Eine Breitbandapplikation, die Internet, Radio und Fernsehen umfasst, ist das so genannte Triple Play, was bereits mit einer 16 MBit/s VDSL2-Verbindung verfügbar ist.

Es existieren aber auch Applikationen und Anwendungen, die eine höhere Uplink-Datenrate, auch Upload-Datenrate genannt, sinnvoll bzw. zwingend erforderlich machen. Beispiele hierfür sind der über Internet erreichbare Server im Heimbereich oder im Büro, das Hochladen von Audio und Videosequenzen oder Dateien zum Internet, das Versenden von Bildern, Videotelefonie, Videokonferenzen, IP-Sprachverbindungen, die Nutzung von Speichermedien im Internet (Network-Storage Applikationen), das Versenden umfangreicher elektronischer Post oder die Kommunikation zwischen PCs (Peer-to-Peer -PtP).

Auch wäre im gewerblichen Bereich der Ersatz kostspieliger Mietleitungen für symmetrische Datenübertragung (SDSL) beispielsweise zur Rechnerkopplung durch eine kostengünstige DSL-Verbindung interessant, da hier sowohl auf Kunden- wie auch auf Netzbetreiber-Seite teure Sondertechnik vermieden werden könnte.

Die am Anwendungsfall orientierte individuelle Auswahl von Upload- und Download-Datenübertragungsrate ist bei den derzeit am deutschen Markt erhältlichen DSL-Produkten nicht möglich, weil diese stets zu einer festen Downloadgeschwindigkeit auch eine feste, dem genutzten DSL-Verfahren inhärente Uploadgeschwindigkeit zur Verfügung stellen. So ist beispielsweise bei dem in Deutschland Privatanwendern angebotene und unter der Bezeichnung "DSL 1000" bekannte DSL-Verfahren mit einer Download-Übertragungsrate von 1024 kBit/s nur eine Upload-Übertragungsrate von 128 kBit/s verfügbar. Bei dem unter der Bezeichnung "DSL 2000" bekannten DSL-Verfahren beträgt die Download-Übertragungsrate 2048 kBit/s, die Upload-Übertragungsrate lediglich 192 kBit/s. Auch bei den höherwertigen Produkten, die für die private, nichtgeschäftliche Nutzung angeboten werden, betragen die Upload-Übertragungsraten gegenüber den Download-Übertragungsraten nur einen Bruchteil von weniger als 10%.

Für Anwendungen, die einen hohen Upload erfordern, besteht daher derzeit nur die Möglichkeit auf eine höherwertige teure DSL-Verbindung auszuweichen, die einen höheren Download-Kanal (Download Channell - DLC) und dann auch zwangsweise einen höherwertigeren Upload-Kanal (Uplink Channel - ULC) besitzt. Höhere Datenraten sind aber in aller Regel mit höherer Dämpfung im Übertragungsbereich, größerer Störbeeinflussung und damit einhergehend mit geringerer Reichweite behaftet und erfordern daher erheblich mehr technischen Aufwand. Dies äußert sich im höheren Preis solcher Verbindungen, was insbesondere deshalb nachteilig ist, weil die höherwertige Bandbreite mit der höheren Download-Übertragungsdatenrate für viele Anwendungen eigentlich nicht erforderlich ist.

Weiterhin ist es von Nachteil, dass ein Teilnehmer auf eine einmal gewählte DSL-Verbindung, für welches sowohl teilnehmerseitig als auch vermittlungsseitig die notwendige Hardware (DSL-Modem) eingerichtet werden muss, auf die mit der Verbindung zur Verfügung gestellten Übertragungsraten festgelegt ist. Eine Erhöhung der Download- oder der Uploadübertragungsrate, gegebenenfalls zu Ungunsten der jeweils anderen Übertragungsrate, im Falle einer Nichtnutzung der Kapazität in einer Verbindungsrichtung ist nicht möglich. Hierzu bedarf es einer Änderung des vom Internetanbieter (ISP, Internet Service Provider) eingerichteten Dienstes sowie in der Regel eines Austausches oder einer Anpassung der Hardware, da mit einem höherwertigen DSL-Verfahren auch zusätzliche Funktionalitäten bereitgestellt werden, die von für geringerwertige DSL-Verfahren vorgesehenen Modems nicht unterstützt werden.

Für Geschäftskunden werden demgegenüber am deutschen Markt auch Produkte angeboten, bei denen die Download-/ Upload-Datenübertragungsraten zumindest im Idealfall gleich sind. Für diese Produkte werden symmetrische DSL-Verfahren wie SDSL (Symmetric Single Pair DSL), auch HDSL (High data rate DSL) genannt, oder SHDSL (Symmetric High Bit rate DSL) verwendet, die jedoch einen hohen technischen Aufwand sowohl teilnehmerseitig als auch auf Vermittlungsseite erfordern und nicht sehr verbreitet sind. Derartige Verfahren sind daher mit erheblichen Kosten verbunden und können mangels Verbreitung nur wenigen Teilnehmern zur Verfügung gestellt werden. Die zugehörigen Produkte am deutschen Markt sind mit etwa zehnmal höheren Kosten gegenüber den vergleichbaren Produkten mit entsprechenden Download-Übertragungsraten behaftet und daher für Privatanwender unwirtschaftlich.

Die internationale Anmeldung WO 99/65218 A1 beschreibt ein Verfahren zur Änderung der Kanalkonfiguration von Modem und Gegenstelle für den Aufbau einer DSL-Verbindung, d.h. bevor eine DSL-Verbindung besteht. Hierzu wird eine bestehende DSL-Verbindung abgebaut und mit neuer Kanalkonfiguration aufgebaut. Ferner offenbart die D1 ein Verfahren und ein Modem, das nicht die gesamte Übertragungsbandbreite einer DSL-Verbindung verwenden soll, sondern vielmehr eine reduzierte Übertragungsbandbreite, wodurch leistungsärmere und damit preiswerte Microchips in Modems verwendet werden können. Dabei wird von dem ADSL- Verfahren gemäß Standard ANSI T1.413 Issue 2 ausgegangen, der jeweils vordefinierte Übertragungskanäle in Upstream- und Downstreamrichtung besitzt. Die Grundidee der WO 99/65218 A1 ist ein "Downsizing". Sie beschreibt eine Verkleinerung der Übertragungsbandbreite gegenüber der im Standard definierten Bandbreite für jeweils Upstream- und Downstream-Daten (Skalierung) zur Produktion billigerer Modems (Chips) oder alternativ zur Anpassung an leistungsschwache Computereinrichtungen, die die volle Datenrate nicht übertragen können. Als nachteilig nennt die WO 99/65218, dass das bestehende ADSL-Verfahren eine hohe Bandbreite benötigt und unflexibel ist, da nicht alle potentiellen "installationen" dieselbe Bandbreite benötigen. Weiterhin sind ADSL-Modems teuer, weil sie zur Anwendung von ADSL besondere Hardware benötigen.

In Anlehnung an den Standard geht die WO 99/65218 A1 von einer Übertragungsstrecke aus, die zwei vordefinierte Übertragungsblöcke besitzt, die jeweils für Upload oder Download verwendet werden. Dabei wird auf Seite 2, Zeile 15 darauf hingewiesen, dass von diesen Blöcken jeweils nur eine Untergruppe bestimmt und verwendet wird, wobei diese Untergruppen mindestens jeweils einen Kanal für Download und Upload umfassen (S. 2, Zeilen 16-18). Es werden folglich weniger Übertragungskanäle verwendet, als bei einer ADSL-Verbindung verwendet werden können. Dies wird bei dem Verfahren der WO 99/65218 A1 "scaling" genannt.

Das US Patent Nr. 6,167,095 A beschreibt einen verbesserten digitalen bidirektionalen Kommunikationstransceiver, in dem der Upstream- und der Downstreambereich des Frequenzspektrums in Reaktion auf den Zustand der Übertragungsleitung und Störungen wie Hintergrundrauschen, Funkinterferenz, Übersprechen und Signalreflektion zugewiesen werden. Die Bewegung der Upstream- und Downstream-Trägerfrequenzen sind derart flexible, dass sie unter Verwendung von Verfahren zur Bestimmung von Signalqualitätsparametern (SQP) des empfangenen Signals in quasi Echtzeit angepasst werden können. Die SQP werden zur Abschätzung des Bitfehlerratenabstands in den empfangenen Daten verwendet und ziehen dabei auch das Gesamt-Signal-zu-Interferenz-Verhältnis in Betracht, wobei die Interferenz Übersprechen, Funkinterferenz und Restecho von benachbarten Upstream- oder Downstreamkanälen umfasst. Da die Trägerfrequenzen der Upstream- oder Downstreamkanäle dynamisch zugewiesen werden, ist die Implementierung eines robusten Trägerakquisitions-, Regenerierungs- und Sperralgorithmus erforderlich. Der robuste Trägeralgorithmus ermöglicht die Trägerregeneration der übertragenen Upstream- und Downstreamsignale unabhängig von der verwendeten Modulation und Symbolrate.

Die internationale Anmeldung WO 00/39977 A1 beschreibt ein Verfahren zur Verbesserung der Fehlerrate und/ oder des Fehlerratenabstands bei der Kommunikation mittels Quadratur-Amplitudenmodulation (QAM), bei dem die Zuweisung und die Konstellationsgröße spektraler Übertragungskanäle für die Kommunikation variiert wird. Die spektrale Zuweisung wird durch Variation der Stoppfrequenz variiert, während eine im Wesentlichen konstante Startfrequenz beibehalten wird, so dass unerwünschter hochfrequenter Inhalt in der Bandbreite gedämpft wird. Alternativ können sowohl die Start- als auch die Stoppfrequenz variiert werden.

Es ist Aufgabe der Erfindung ein Verfahren für DSL-Telekommunikationsverbindungen zur Verfügung zu stellen, das bei einem beliebigen existierenden asymmetrischen DSL-Verfahren unter Beibehaltung dessen Bandbreite, Kodier- und Modulationsverfahren eingesetzt werden kann und gegenüber dessen inhärenter Upload-Datenübertragungsrate eine wesentlich höhere Upload-Datenübertragungsrate bei vergleichsweise geringen Kosten zur Verfügung stellt.

Diese Aufgabe wird erfindungsgemäß durch das Verfahren mit den Merkmalen des Anspruchs 1 gelöst. Vorteilhafte Ausgestaltungen der Erfindungen sind in den Unteransprüchen enthalten sowie in der nachfolgenden Beschreibung erläutert.

Besonders vorteilhaft ist dabei, dass bei dem erfindungsgemäßen Verfahren zur Anpassung von Upload- und Download- Datenübertragungsrate einer DSL-Verbindung innerhalb, zwischen, und/ oder im Anschluss an Telekommunikations- oder Datennetze, insbesondere zwischen einem teilnehmerseitigen Modem und einer Gegenstelle einer Vermittlungsstelle, wobei die Übertragung innerhalb eines in Übertragungskanäle unterteilten Frequenzbereichs einer bestimmten Gesamtbandbreite erfolgt und eine erste Gruppe von Übertragungskanälen der Upload-Datenübertragung und eine zweite Gruppe von Übertragungskanälen der Download-Datenübertragung zugeordnet ist und die Summe der Übertragungskanäle beider Gruppen der Gesamtanzahl an für die Datenübertragung zur Verfügung stehender Übertragungskanäle entspricht,
die Anzahl der Übertragungskanäle der beiden Gruppen unter Beibehaltung der Gesamtbandbreite in Abhängigkeit einer benötigten Upload- und/ oder Download-Datenübertragungsrate verändert wird.

Es werden somit universelle wahlweise für Upload- oder Download verwendbare Kanäle vorgeschlagen, wobei eine Vergrößerung der Anzahl der Uploadkanäle zu einer gleichermaßen Reduzierung der Downloadkanäle mit den entsprechenden Auswirkungen auf die jeweilige Datenübertragungsrate hat, wobei die Gesamtzahl der verfügbaren Übertragungskanäle durch das gewählte Verfahren nicht erhöht wird.

Dies ermöglicht die Verwendung der gesamten Bandbreite einer beliebigen bestehenden DSL-Kommunikationsverbindung applikationsspezifisch wahlweise für Download- oder Uploadzwecke. Damit wird ein wesentlicher Mehrwert für DSL-Verbindungen aller Art geschaffen und mit der Verwendung des bestehenden DSL-Anschlusses sowohl privaten als auch geschäftlichen Anwendern eine preisgünstige Lösung für gewünschte hohe Upload-Datenübertragungsraten geboten. Ein weiterer Vorteil ist, dass teure symmetrische DSL-Verbindungen und Festverbindungen zumindest teilweise substituiert werden können. Insbesondere werden bei dem erfindungsgemäßen Verfahren hochratige Upload-Datenraten und symmetrische Datenraten für Voice/Videokonferenz, und dies ohne teure symmetrische DSL-Verfahren zu verwenden, ermöglicht, ohne die im jeweiligen DSL-Verfahren begründete Gesamtbandbreite zu erhöhen oder auf ein höherwertiges, teureres Verfahren mit gegebenenfalls problematischer Verfügbarkeit ausweichen zu müssen.

Alternativ kann bei dem erfindungsgemäßen Verfahren auch die Anzahl der Übertragungskanäle der Download-Verbindung zweckgerichtet zu Lasten der Upload-Übertragungsrate insbesondere dann erhöht werden, wenn eine benötigte Download-Datenübertragungsrate des verwendeten DSL-Standards für die anstehende Aufgabe nicht ausreicht, bzw. die zur Verfügung stehende übliche Upload-Übertragungsrate gerade nicht erforderlich ist.

Alternativ zu einer gezielten Erhöhung der Anzahl von Übertragungskanälen in einer Verkehrsrichtung kann somit auch vorgesehen werden, dass im Falle geringer aktueller Datenübertragung in einer Verbindungsrichtung ungenutzte Übertragungskanäle der entsprechenden anderen Verkehrsrichtung zugeordnet werden.

Von besonderem Vorteil ist bei dem erfindungsgemäßen Verfahren, dass die für die Datenübertragung zur Verfügung stehenden Übertragungskanäle gegenüber dem ursprünglichen standardgemäßen DSL-Verfahren nicht permanent nur unidirektional verwendet werden, sondern in Abhängigkeit des aktuellen Übertragungsbedarf entweder in Verbindungsrichtung zum Netz (Upload) oder in Verbindungsrichtung zum Teilnehmer (Download) verwendet werden, so dass eine bidirektionale Nutzung aller für die Datenübertragung verfügbaren Übertragungskanäle vorliegt.

In einer bevorzugten Ausführungsvariante kann bei dem erfindungsgemäßen Verfahren die Anpassung der Upload-Übertragungsrate durch Vertauschen der Anzahlen der Übertragungskanäle der beiden Gruppen erfolgen. So kann beispielsweise vorgesehen werden, dass bei einem DSL-Übertragungsverfahren mit n für den Download und m für den Upload vorgesehenen Übertragungskanälen, wobei n größer als m ist, eine höhere Upload-Datenübertragungsrate dadurch erreicht werden, dass die für den Upload vorgesehenen Übertragungskanälen für den Download verwendet werden und die für den Download vorgesehenen Übertragungskanäle für den Upload verwendet werden. Dies ermöglicht eine umgekehrte, inverse Nutzung der vorhandenen Übertragungskanäle.

Alternativ kann die Anpassung zum Erhalt einer symmetrischen Datenübertragungsrate, bei welcher Upload- und Download-Übertragungsrate gleich sind, durch Zuordnung im Wesentlichen gleicher Anzahlen von Übertragungskanälen der beiden Gruppen erfolgen, wobei hierunter insbesondere auch derjenige Fall verstanden wird, in dem eine Gruppe einen Übertragungskanal mehr als die andere, beispielsweise in Folge einer ungradzahligen Anzahl zur Verfügung stehender Übertragungskanäle aufweist, oder alternativ die Anzahl der jeweils verwendeten Übertragungskanäle in einer Übertragungsrichtung als Produkt mit der innerhalb eines Übertragungskanals dämpfungsabhängig jeweils individuell vorliegender Datenrate, gleiche Brutto-Datenraten für jeweils beide Übertragungsrichtungen ermöglichen. Dies ist insbesondere bei Applikationen wie IP-Telefonie in Sprache und/ oder Bild (Video-Telefonie, -Konferenzen) sinnvoll, bei denen in beide Verbindungsrichtungen die gleiche Menge an Daten zu übertragen ist.

Bevorzugt können die Anzahl und Anordnung der Übertragungskanäle einer jeweiligen Übertragungsrichtung als Gruppe jeweils als Übertragungsprofil definiert werden, wobei die Anpassung der Upload- und Download-Datenübertragungsrate dabei durch Umschaltung von einem ersten Übertragungsprofil auf ein zweites Übertragungsprofil erfolgen kann u.s.w. Bei einem Übertragungsprofil kann es sich beispielsweise um die der DSL-Verbindung inhärenten Aufteilung der für die Datenübertragung zur Verfügung stehenden Anzahl an Übertragungskanälen auf die erste und zweite Gruppe handeln. Dies kann beispielsweise eine Grundeinstellung der DSL-Verbindung sein. Ein weiteres Übertragungsprofil kann eine zu der genannten Grundeinstellung umgekehrte Transportrichtung der Übertragungskanäle, sowie wiederum ein weiteres Übertragungsprofil eine symmetrische Aufteilung der Übertragungskanäle auf die beiden Gruppen sein.

Vorzugsweise kann vorgesehen werden, dass beliebige, geeignete Übertragungsprofile definiert und in den Modems abgespeichert werden, wobei die Umschaltung durch Senden einer Steuersequenz erfolgen kann. Ein geeignetes Übertragungsprofil kann dabei beispielsweise auf Basis bestimmter vorgegebener Prioritäten und/oder Verfahrensregeln ausgewählt werden.

Vorzugsweise kann die Kanalumschaltung für wahlweise Upload-/Downloadrichtung bzw. die komplette Profilumschaltung dynamisch im laufenden Betrieb erfolgen. Dies hat den Vorteil, dass dem Teilnehmer stets die optimale Datenübertragungsrate für die aktuelle Verbindungsrichtung zur Verfügung steht.

In einer vorteilhaften Ausführung kann die Anpassung, insbesondere die Profilumschaltung, im Bedarfsfall vorzugsweise automatisch teilnehmerseitig durch die Betriebssoftware des Modems oder Applikationssoftware des Anwenders oder netzseitig durch den Netzbetreiber erfolgen. Dies hat den Vorteil, dass der Teilnehmer keinen manuellen Eingriff in die Übertragungseigenschaften der DSL-Verbindung vornehmen muss und Verzögerungen bei der Bereitstellung einer erhöhten Upload-Datenübertragungsrate vermieden werden.

Weiterhin kann erfindungsgemäß eine Bewertung des Echtzeitverhaltens und/oder des Datenaufkommens der Datenübertragung in beiden Verkehrsrichtungen durchgeführt werden und eine Anpassung der Upload-Datenübertragungsrate, insbesondere eine Profilumschaltung, in Abhängigkeit dieser Bewertung vorgenommen werden. Dabei kann beispielsweise das Datenaufkommen in die Upload Verbindungsrichtung mit demjenigen der Download Verbindungsrichtung verglichen und eine entsprechende Erhöhung der Anzahl der Übertragungskanäle der ersten Gruppe dann vorgenommen werden, wenn das Datenaufkommen in die Upload Verbindungsrichtung erheblich höher oder das Echtzeitverhalten in die Upload Verbindungsrichtung erheblich schlechter ist.

Die Bewertung des Echtzeitverhaltens und/oder des Datenaufkommens der Datenübertragung kann dabei permanent oder zeitweise erfolgen. Eine Anpassung der Upload-Datenübertragungsrate, insbesondere eine Profilumschaltung, kann damit unverzüglich erfolgen und nach Rückgang des erhöhten Datenaufkommens in Upload Verbindungsrichtung wieder rückgängig gemacht werden. Vorzugsweise kann dann wieder die Grundeinstellung gewählt werden.

Alternativ oder in Kombination zur verbindungsbewertungsabhängigen Anpassung der Upload-Datenübertragungsrate, insbesondere einer Profilumschaltung, kann eine solche auch beim Starten und/ oder Beenden einer Applikationssoftware, einer Anwendung der Applikationssoftware und / oder eines Treibers erfolgen. So kann beispielsweise das Starten eines IP-Telefonie-Programmes (Applikation) oder die Vornahme eines Anrufs (Anwendung) innerhalb oder mittels des IP-Telefonie-Programmes eine Umschaltung auf das symmetrische Übertragungsprofil bewirken und nach dem Beenden der Anwendung oder Applikation eine Rückumschaltung auf das ursprüngliche Übertragungsprofil erfolgen.

Vorteilhaft ist weiterhin, wenn innerhalb einer Initialisierungsphase der Modems die Übertragungskanäle in beide Übertragungsrichtungen vermessen und Übertragungsparameter in zumindest einem Modem abgespeichert werden. Auf diese Weise können die Übertragungseigenschaften der zur Verfügung stehenden Kanäle ermittelt werden und im Falle einer in eine bestimmte Übertragungsrichtung bessere Übertragungseigenschaft, der Übertragungskanal für diese Übertragungsrichtung verzögerungsfrei ohne Neueinmessung verwendet werden. Vorzugsweise können als Übertragungsparameter die kanalspezifischen Dämpfungs-, Modulations- und/ oder Verstärkungsparameter gemessen werden.

Die Erfindung wird nachfolgend anhand detaillierter Erläuterung zum Standes der Technik sowie ihrer Unterschiede und Vorteile gegenüber dem Stand er Technik anhand von Ausführungsbeispielen und den beigefügten Figuren beschrieben. Es zeigen:
- Fig. 1:: DSL Referenzkonfiguration
- Fig. 2:: Schematisches ADSL-DMT Übertragungsverfahren
- Fig. 3:: Übertragungsbandbreite bei unterschiedlicher Leitungslänge
- Fig. 4:: Übertragungsbänder/Frequenzplan nach ITU-T G.993.2
- Fig.: 5: ADSL2 und ADSL2 + nach ITU-T
- Fig. 6:: Blockschaltbild ADSL Modem mit Ethernet Router und WLAN-Anschluss
- Fig. 7:: Erweiterte ADSL Transmitter-Referenzkonfiguration
- Fig. 8:: ADSL2 und ADSL2 + nach ITU-T mit erfindungsgemäß erweiterter Nutzung der Übertragungskanäle
- Fig. 9:: ADSL-Technik mit hoher symmetrischer Datenrate

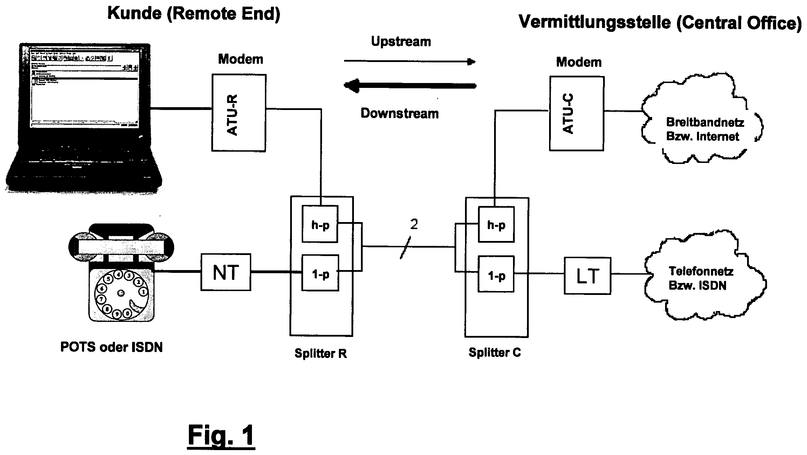

Für den leitungsgebundenen breitrandigen Teilnehmeranschluss an Telekommunikationssysteme und -netze werden unterschiedliche Übertragungsverfahren verwendet, die unter dem Begriff xDSL (Digital Subscriber Line /Digitale Teilnehmeranschlussleitung) zusammengefasst sind. Der Buchstabe x wird dabei als Synonym für die unterschiedlichen technischen Realisierungsvarianten verwendet. Die Übertragungsverfahren besitzen die Gemeinsamkeit, dass hierbei die vorhandene Kabelinfrastruktur zum Kunden, d.h. die Teilnehmeranschlussleitung, verwendbar ist bzw. sein soll. Dies impliziert in letzter Konsequenz die Verwendung der Kupferdoppelader in Papier- oder Kunststoffisolierten Kabeln, die ursprünglich für die analoge Übertragung einer Bandbreite von ca. 300 Hz bis 3, 4 kHz bei einer Reichweite von maximal 8 km dimensioniert war. Diese historische Telefonleistungsinfrastruktur wird POS (Plain Old Telephony System) genannt. Im Zuge der technischen Innovation wurde diese Leitung bereits für den ISDN - Anschluss (Integrated Services Digital Network) von Teilnehmereinrichtungen verwendet, wobei auf der Kupferdoppelader zwischen Vermittlungsstelle und Teilnehmeranschluss ein komplexes Echokompensationsverfahren zum Einsatz kommt und die Teilnehmeranschlussleitung auf der Vermittlungsseite mittels einer Leitungsendeinrichtung LT (Line Termination) und auf der Teilnehmerseite mit einem Netzabschluss NT (Network Termination) ausgerüstet ist. Im LT erfolgt eine Kopplung von 4-Draht auf 2-Draht-Technik, die im NT wieder umgekehrt wird. Dort wird die so genannte So-Schnittstelle mit 2 x 64 kBit/s Datenkanälen und einem 16 kBit/s Signalisierungskanal für den Busanschluss mehrerer ISDN-Endgeräte verfügbar gemacht. Die DSL-Verfahren berücksichtigen neben den bestehenden POS- und ISDN-Telefonanschlüssen zusätzlich einen schnellen IP- Datenkanal über die Teilnehmeranschlussleitung, der als synchroner oder asynchroner bidirektionaler Datenkanal mit Internet Protokoll ausgelegt ist. Fig. 1 zeigt schematisch die Verbindungsstruktur.

Insbesondere neue Telekommunikationsunternehmen sparen sich gerne den Aufbau von Telefonvermittlungsstellen für analoge oder digitale Sprachkanalvermittlung und betreiben ihren Sprachdienst zunehmend über die IP-Datenkanäle der DSL-Verbindung (VoIP, Voice over IP). Dies ist im Vergleich zu ISDN von minderwertiger Sprachqualität und vergeudet in hohem Maße Übertragungsbandbreite im Vergleich zur Sprach-Bandbreite von 3,1kHz und reduziert die verfügbare Datenrate für Datenübertragung, spart aber Infrastruktur. Neuere Entwicklungen tragen der Problematik Rechnung und führten zur Standardisierung technologisch aufwändiger synchroner Sprachkanäle innerhalb der DSL-Verfahren auf physikalischer Ebene durch Einfügen von Sprachkanälen bei ADSL2, bekannt als CVoDSL (Channelized Voice over DSL) oder durch hochprioritäre Protokollelemente auf IP-Ebene.

Grundsätzlich werden im DSL-Bereich drei unterschiedliche Übertragungsverfahren unterschieden, nämlich das symmetrische, das asymmetrische und das Hochgeschwindigkeits-DSL.

Bei symmetrischen DSL- Verfahren wie SDSL, auch HDSL genannt (High data rate DSL), oder SHDSL (Symmetric High Bit rate DSL) werden zwei Doppeladern für getrennte Senderichtungen verwendet. Die bekanntesten Verfahren sind in Europa das CEPT E1 Übertragungsverfahren (V2m, S2m) mit 2,048MBit/s-Schnittstelle, 2B1 Q-Leitungscode und adaptiver Leitungsentzerrung sowie 32-Kanal-Struktur mit 30 Nutzkanälen zu je 64 kBit, einem Synchronisationskanal und einem Outband-Signalisierungskanal für entweder D-Kanal-Protokoll (Primärmultiplex-Anschluss im Teilnehmeranschlussbereich) oder Zentralkanal-Zeichengabesystem CCITT#7 (Systemkopplung im Vermittlungsbereich) für Kupferkabel (CU) oder Glasfaser-Monomodefaser (GF) im Einsatz. In Nord-Amerika existiert das weniger leistungsfähige ANSI T1-Verfahren mit 1,44 MBit/s, definiert in dem Standard ANSI T1.413 des American National Standards Institute (ANSI) und ITU G.992.1 der International Telecommunication Union (ITU), mit lediglich 24 Nutzkanälen zu je 56 kBit/s mit Inbandsignalisierung (OnHook / OffHook). Die Reichweite beträgt etwa 4,5 km bei 0,5 mm Kupferader. Es wurden auch SDSL -Systeme (Symmetric single pair DSL) vorgeschlagen, die jedoch keine große Verbreitung gefunden haben. SDSL erfordert einen hohen technischen Aufwand sowohl auf Teilnehmer-, wie auch auf Vermittlungsseite. So beträgt die Reichweite der so genannten Trunk- und Linecard-Peripherie lediglich ca. 100m und muss elektrisch im NT/LT umgesetzt werden.

Bei asymmetrischen DSL-Verfahren (ADSL) macht man sich den Umstand zu Nutze, dass der durchschnittliche Internet-Anwender eine stark asymmetrische Kommunikation betreibt und vorwiegend eine hohe Bandbreite zum Surfen und Download, d.h. zum Herunterladen von Internet-Seiten oder Daten auf den Personal Computer (PC) aus dem Netz, benötigt, aber in der Regel nur geringe Datenvolumen oder kurze Befehle selbst, d.h. zum Netz versendet, beispielsweise in Form von Kommandos oder elektronische Post. Das ADSL- Verfahren verfügt demnach über eine große Asymmetrie zwischen Empfangs- und Sendedaten. Die Reichweite ist von der jeweiligen Bandbreite abhängig. Verwendet werden beispielsweise ADSL, ADSL lite, ADSL 2, ADSL 2+ (auch ADSLplus genannt) oder ADSL 2++ (entspricht ADSL 4). Diese Verfahren werden nachstehend näher erläutert.

Beim Hochgeschwindigkeits-DSL, so genanntes VDSL (Very High Bit rate DSL) ist die erzielbare Reichweite auf wenige Hundert Meter begrenzt, so dass zusätzliche Hardwareeinrichtungen wie Verstärker oder Multiplexer zwischen Vermittlungsstelle VSt und Teilnehmer angeordnet werden müssen. Beispielsweise verwendet man optische Glasfaserverbindungen zwischen der Vermittlungsstelle und dem Teilnehmeranschlussbereich, die im so genannten DSLAM (Digital Subscriber Line Access Multiplexer) terminiert und auf unterschiedliche sternförmige bestehende VDSL-Kupferverbindungen sehr kurzer Reichweite (ca. 150m) bis zum Teilnehmer aufgeteilt werden. Diese Infrastruktur wird auch als "Fiber to the Curb" (FTTC, Glasfaser bis zum Bordstein) bezeichnet, da größere Entfernungen nur sinnvoll mit Glasfaser-Infrastruktur zu überbrücken sind. Bei VDSL2 wird der DSLAM auch als "VDSL Terminal Unit - Office" (VTU-O) bezeichnet. Auf der Teilnehmerseite, d.h. beim Kunden, steht dabei das VDSL-Modem. Dies wird auch als "Customer Premises Equipment" (CPE) oder als "VDSL Terminal Unit - Remote" (VTU-R) bezeichnet.

Es existieren aber auch Anwendungen und Applikationen, die eine höhere Uplink-Datenrate sinnvoll bzw. zwingend erforderlich machen. Dies ist beispielsweise der über Internet erreichbare Server im Heimbereich oder im Büro (Small Office Home Office, SoHo), das Hochladen von Audio und Videosequenzen, das Versenden von Bildern, Videotelefonie, Videokonferenzen, IP- Sprachverbindungen, die Nutzung von Speichermedien im Internet, das Versenden umfangreicher elektronischer Post, die Kommunikation zwischen PCs (Peer-to-Peer -PtP) etc.

Für diese Anwendungen besteht derzeit nur die Möglichkeit auf eine höherwertige teure DSL-Verbindung auszuweichen, die eine höhere Download-Kanal (Download Channell - DLC), dann auch einen höherwertigeren Upload Kanal (Uplink Channel - ULC) besitzt. Nachteilig ist natürlich der höhere Preis, insbesondere wenn die höherwertige Bandbreite mit der höheren Download Verbindung (Downlink Channell - DLC) eigentlich nicht erforderlich ist. Höhere Datenraten erfordern jedoch erheblich mehr technischen Aufwand und sind in aller Regel mit höherer Dämpfung im Übertragungsbereich, größerer Störbeeinflussung und damit einhergehend mit geringerer Reichweite behaftet. Dies äußert sich auch im höheren Preis solcher Verbindungen.

Es besteht daher Bedarf an einer technischen Verfahrensweise für eine ökonomische DSL-Verbindung für breitbandiges Hochladen (High Speed Upload-Verbindung, HS-ULC). Dies wird durch die vorliegende Erfindung bereitgestellt. Sie baut auf bestehenden DSL-Verfahren auf und erweitert diese sinnvoll.
Mit zunehmender Bandbreite wird das analoge Modulationsverfahren auf der Teilnehmeranschlussleitung immer komplexer. So besitzen die im ISDN-Betrieb eingesetzten 2B1Q - und 4B3T- Leitungscodes für höhere Übertragungsraten nicht mehr genügend Frequenzökonomie. Bei aktuellen ADSL- Systemen wird vorwiegend das DMT-Verfahren (Discrete Multi-Tone, diskreter Mehrton) verwendet, wobei der gesamte Frequenzbereich in einzelne Übertragungskanäle eingeteilt wird, die jeweils getrennt individuelle codiert und mit unterschiedlichen Übertragungsparametern behaftet gemäß der frequenzspezifischen Übertragungseigenschaften der Kabelverbindungen übertragen werden. Bei älteren Verfahren wurde hingegen noch der komplette Verkehr einer Richtung codiert (CAP).

Das ADSL-Übertragungsverfahren ist in dem Standard ITU-T G.992.1, wegen des verwendeten Dekulationsverfahrens auch bekannt als G.DMT, definiert und liefert Datenströme bis zu 6,144 MBit/s Download und bis zu 0,640 MBit/s Upload. Die historische ADSL-Übertragung war gemäß dem Standard ANSI T1.413-1998 das so genannte CAP-Verfahren (Carrierless Amplitude Phase), was derzeit nur noch von geringer Bedeutung ist. Das CAP-Verfahren besitzt keine vergleichbare Multi-Kanal-Struktur, wie das DMT-Verfahren. Der Übertragungskanal ist in drei Frequenzbereiche eingeteilt, das Sprachband (0-4 kHz), den Uplink-Channel (ULC) (25-160 kHz) und den variablen Download-Channel (DLC) mit 200 kHz bis maximal 1,1 MHz. Das Verfahren besitzt somit nicht die Übertragungsqualität wie das wesentlich flexiblere DMT-Verfahren.

Allen DMT-ADSL- Verfahren gleich ist die Verfahrensweise, dass der obere Frequenzbereich wegen unterschiedlicher Leitungsparameter nicht garantiert werden kann. Die Download-Übertragungsrate wird deshalb mit einem maximal möglichen Wert beziffert, der nicht in jedem Fall erreicht werden kann.

DMT ist eine Kombination aus Amplituden- und Phasenmodulation. Bei dem Standard ITU-T G.992.1 wird das zur Verfügung stehende Frequenzspektrum in 255 gleiche Teilbänder, so genannte Subkanäle, auch "Bins" genannt, mit je 4,3125 kHz Bandbreite, aufgeteilt, die unabhängig voneinander moduliert und codiert werden können und mit unterschiedlichen Pegeln behaftet sein können. Dabei berechnen sich die jeweiligen Mittenfrequenzen aus der Beziehung N = n • 4,3125 kHz. Es werden maximal 224 DLC und bis zu 31 ULC verwendet, so dass insgesamt 255 Übertragungskanäle zur Verfügung. Kanäle. Bin "0", was 0Hz entspricht, kann nicht verwendet werden. Falls gleichzeitig ein analoger Fernsprechkanal über POTS verwendet wird, was dann mit einer Bandbreite von 300 Hz bis 3,4 kHz erfolgt, wird hierzu bin 1 verwendet und ein Abstand zu den Datenkanälen eingehalten, so dass erst wieder bin 7-31 für ULC, entsprechend 25-138 kHz, und bin 32-255 für DLC, entsprechend 138 kHz bis 1104kHz, verwendet werden. Der große Frequenzabstand sichert eine störungsfreie Sprachübertragung und gewährleistet die zusätzliche Übertragung des 16 kHz Gebührenimpulses, welcher aus Kompatibilitätsgründen weiter berücksichtigt werden muss.

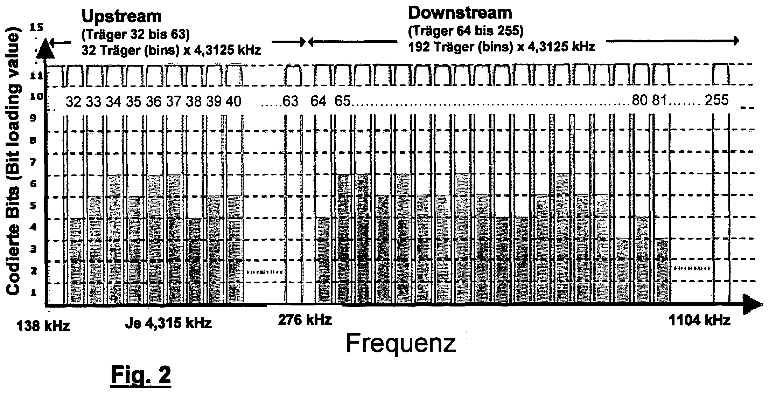

In Deutschland werden die Träger 1 bis 32 für ISDN bzw. POTS (analog) reserviert. Die Träger 33 bis 64 werden für den ULC, die Träger 65 bis 255 für den DLC genutzt. Ein Kanal wird für den Pilotton verwendet. Darüber können DSL-Modem und DSLAM feststellen, ob sie miteinander verbunden sind. In Upstream-Richtung stehen demnach 32 und in Downstream-Richtung 190 Kanäle gemäß Fig. 2 zur Verfügung.

Die Kanalkapazität variiert pro Übertragungskanal gemäß der jeweilige Kanaldämpfung und dem Signal-Rauschabstand zwischen 0 und 15 Bits/Hz. Fig. 2 veranschaulicht die Verfahrensweise, wobei jeweils unterschiedliche Signalpegel angedeutet sind.

Hierdurch ergeben sich bei idealer Leitung theoretisch folgende Datenübertragungsraten:
Geht man von ADSL-over- ISDN, definiert im Anhang B des Standards ITU-T G.992.1, mit 4 MHz Takt mit den kalkulierten 190 Kanälen und jeweils 15 Bit aus, wäre maximal ein DLC von 11,4 MBit/s möglich. Durch eine Reed-Solomon-Codierung zur Fehlerkorrektur reduziert sich die Geschwindigkeit jedoch auf maximal 8 MBit/s, und dies unter idealen Bedingungen. In Upstream-Richtung stehen für ULC effektiv ca. 768 kBit/s zu Verfügung. Die endgültige Übertragungsgeschwindigkeit ist stark von der Leitungslänge, der Leitungsbeschaffenheit und Störbeeinflussungen abhängig und selten mit der maximal möglichen Datenrate identisch. Insbesondere können die hohen Frequenzbänder meist nicht mit der gewünschten Kanaleffizienz betrieben werden. Die Netzbetreiber definieren eine maximale Leitungslänge oder Leitungsqualität und bestimmen danach jeweils, welche Übertragungsgeschwindigkeit sie ihren Kunden anbieten können bzw. möchten.

Bei einem Trägerabstand von 4,3125 kHz überlappen sich die Seitenbänder allerdings, so dass die Kanalbandbreite geringer als 4,3125 kHz ausfällt. Die Orthogonalität des verwendeten COFDM-Verfahrens (Coded Orthogonal Frequency Division Multiplex) vermeidet hierbei Interferenzen. COFDM kennzeichnet das kanalspezifische DMT-Verfahren.

Telefon- und Datenkanäle werden üblich durch Bandfilter, d.h. auch Weiche oder Splitter genannt, getrennt. Dabei werden die niederfrequenten Sprachkanal-Anteile des POTS- Kanal durch einen Tiefpass zum Telefon geleitet, während die hochfrequenten Anteile durch einen Hochpass zum DSL-Modem geleitet werden, siehe Fig. 1. In der Vermittlungsstelle (Vst bzw. DIVÖ) teilt ebenfalls eine Splitter-Einrichtung das analoge Telefonieband vom digitalen Datenband und führt letzteres einem Multiplexer, dem so genannten DSLAM (Digital Subscriber Line Access Multiplexer) zu, das im Sinne der Erfindung eine vermittlungsseitige Gegenstelle darstellt. Von dort werden Daten in üblicher Weise über eine ATM-Strecke (Asynchrone Transfer Mode, ATM DSLAM genannt) oder auch alternativ über ein Gigabit-Ethernet (IP DSLAM) zum Internet Service Provider (ISP) und von dort weiter ins Internet geleitet. Alternativ ist eine Übertragung nach SDH-Verfahren (Synchrone Digitale Hierarchie) möglich. In Europa werden Up- und Downstream in der Regel mittels Echokompensation voneinander getrennt.

Auf der Teilnehmeranschlussleitung kann es durch unterschiedliche Ursachen zu Störungen im Frequenzbereich, d.h. zu kanalindividuellen, frequenzabhängigen Dämpfungen unterschiedlicher Art auf jeder individuellen Anschlussleitung, selbst bei jedem individuellen Adernpaar innerhalb eines einzelnen Kabels kommen, die beispielsweise durch unterschiedliche verwendete Leiterdurchmesser innerhalb einer Teilnehmerleitung, unterschiedliche Isolation, durch die kombinierte Verwendung von Kabeln bei einem Teilnehmeranschluss und dadurch bedingte Reflexionen, durch ungünstige Kontaktierungen, durch Übersprechen benachbarter Doppeladern im gleichen Kabel, durch Ableitungen usw. verursacht werden. Insbesondere stören sich ISDN- und DSL-Verbindungen im gleichen Kabel sowie DSL-Verbindungen benachbarter Doppeladern gegenseitig, so dass die Übertragungsprobleme in aller Regel auch noch zeitlich dynamisch auftreten.

Zur Optimierung der Datenübertragung im gesamten Frequenzbereich ermitteln das ADSL- Modem auf der Teilnehmerseite sowie sein Pendant in der Vermittlungsstelle deshalb paarweise zumindest bei jedem neuen Einschalten die Modulationsparameter für die gemeinsame Verbindung neu , um so die Leitungseigenschaften optimal ausnutzen zu können. Die DMT-Daten werden üblich im ADSL- Modem mathematisch mittels Fast Fourier- Transformation (FFT) berechnet. Dabei wird die Trägerfrequenz im Frequenzspektrum jeweils sukzessive erhöht und für die jeweilige Trägerfrequenz die entsprechenden Übertragungsdaten, insbesondere Signal zu Rauschabstand (Signal to Noise Ratio, SNR), Verstärkung (Gain) und Bits pro Kanal, zu jedem einzelnen Übertragungskanal ermittelt und in einer internen Tabelle abgespeichert. Diese Tabelle wird in der Regel bei jedem Neueinschalten des Modems neu angelegt. Dieser Initialisierungsvorgang, auch Trainingsphase genannt, ist bei ADSL entsprechend mit ca. 20 Sekunden Zeitaufwand verbunden.

Ob ein Kanal als DLC oder ULC fungiert, ergibt sich dabei aus dem Übertragungsprofil innerhalb der Standardisierung, über das sich die Modems einer Strecke initial abstimmen. Eine Änderung der Übertragungsrichtung innerhalb eines Kanals nach dieser Abstimmung, insbesondere dynamisch im Betrieb, ist jedoch nicht möglich.

Auf diese Art und Weise können frequenzabhängige Dämpfungswerte der Übertragungsstrecke beispielsweise durch unterschiedliche zugeordnete Verstärkungsparameter weitgehend kompensiert werden oder Frequenzbereiche im Extremfall von der Verwendung ausgeschlossen werden. Dies passiert beispielsweise mit den höchsten Frequenzen bei zunehmender Entfernung von der Vermittlungsstelle, d.h. bei großer Leitungslänge. Das ADSL- Übertragungsverfahren ist daher ein adaptives Übertragungsverfahren, das sich für jede Verbindung individuell automatisch optimiert.

Für ISDN und ADSL können entweder die Zeit- oder die Frequenzmultiplexübertragung angewendet werden. Der ISDN-Datenstrom wird bei der Zeitmultiplexübertragung in den ADSL-Datenstrom eingefügt, über die Leitung übertragen und von dem ADSL-Modem wieder in die ISDN- und ADSL-Daten aufgeteilt und den jeweiligen Endgeräten zur Verfügung gestellt. Der Vorteil dieses Verfahrens liegt in dem Wegfall eines Splitters. Auch die zusätzliche Übertragung analoger Telefonsignale ist bei dieser Übertragungsart möglich. In der Praxis wird jedoch jeweils ein Hochpass bzw. Tiefpass zur besseren Geräteentkopplung empfohlen.

Da ADSL im amerikanischen Raum entstand, wo vorwiegend analoge Telefonie betrieben wird, kann der Datenbereich ab beispielsweise 20 kHz vergleichbar niedrig angesetzt werden. In Europa, insbesondere in der Bundesrepublik Deutschland, ist ISDN weit verbreitet, wodurch ein höheres Frequenzspektrum für die "Telefonie" verwendet wird. Um die obere Grenze für beide Varianten und damit die Reichweite konstant zu halten, wurde vom European Telecommunications Standards Institute (ETSI) daher die untere Grenze des ADSL- Frequenzbereiches, unter Beibehaltung der bisherigen Obergrenze nach oben verschoben, wodurch eine geringere Downlink- Bandbreite bei Systemen mit Frequenzmultiplexverfahren entstand. Abhilfe hierzu brachte die Einführung des Echokompensationsverfahrens. Hierbei wird das kleine empfängerseitige Nutzsignal aus dem hohen eigenen Sendesignal herausgefiltert. Somit können sich Uplink und Downlink überlappen und die Downlink- Bandbreite steigt wieder an.
Nachteilig wirken sich jedoch die großen Kosten für dieses komplexe Verfahren aus. Die Unterschiedlichen Kanalnutzungen mit oder ohne Telefonie sowie mit Pots- oder ISDN-Kanal wird bei der Standardisierung in entsprechenden Anhängen der Standards geregelt.

Das ADSL arbeitet im Gegensatz zu den bitweise orientierten Modemübertragungen paketweise. In diesen Paketen kann jede Art von Daten enthalten sein. Üblicherweise handelt es sich dabei aber um Pakete einer übergeordneten Netzwerkschicht, wie ATM oder Ethernet. Derzeit existiert keine einheitliche Lösung für die zum Datentransport über ADSL zu verwendenden Protokolle. ATM wird aber teilweise auf den Übertragungsstrecken zum Einsatz gelangen. Das ATM- Protokoll ist nach dem OSI-Schichtmodell (Open Systems Interconnection) ein Schicht- 2 Protokoll. Mit Hilfe der physikalischen Schicht 1 baut es eine Verbindung zwischen zwei Punkten auf, über die anschließend Daten ausgetauscht werden können.

Die bevorzugten Endgeräte der ADSL- Technik sind der PC und die Set Top Box für digitale TV-Anwendungen. Aus diesem Grund werden USB- (Universal Serial Bus), PCI- (Peripheral Component Interconnect), Ethernet-, ATM- und UTOPIA- (Universal Test and Operations Physical Interface for ATM) Schnittstellen für die ADSL-Technik favorisiert.

Der Standard ITU-T G.995.1 gibt einen Überblick über die vorhandenen DSL-Standards. Die Spezifikationen G.992.1, G.992.2, G.991.1, G.991.2, G.996.1, G.994.1 und G997.1 spezifizieren die physikalische Übertragung beim DSL-Verfahren. ITU-T G.994.1, G.996.1 und G.997.1 liefern hierzu erweiterte Informationen, spezifizieren das Handshake- Verfahren bei der Protokollsynchronisation, Schnittstellenmanagement und Tests.

Der Standrad ITU-T G.992.1 spezifiziert die physikalische Schnittstelle des ADSL-Verfahrens und die entsprechende Transportkapazität. Die Kundenschnittstelle, d.h. das teilnehmeranschlussseitige DSL-Modem wird mit ATU-R (ADSL Tranceiver Unit-Remote Terminal End) und die vermittlungsseitige Schnittstelle mit ATU-C (ADSL Tranceiver Unit-Central Office End) bezeichnet, siehe Figur 1. Der Standard ITU-T G.992.1 spezifiziert eine DLC Nettodatenraten bis 6,144 MBits/s, eine ULC bis 640 kBits/s bei gleichzeitigem Betrieb einer analogen Fernsprech- oder Datenverbindung (Modembetrieb, Fax etc.), die ISDN- Alternative ergibt sich aus dem Standard ITU-T G.961. Die tatsächlich erzielbaren Datenraten sind weitgehend vom Signal- zu - Rausch Abstand (SNR) abhängig.

In Kombination von ITU-T G.992.1 und ITU-T G.994.1 wird die Kompatibilität und Handshake-Prozedur auf der U-Schnittstelle, d.h. der Teilnehmeranschlussleitung zwischen Vermittlungsstelle und Teilnehmereinrichtung beschrieben, so dass beide Übertragungseinrichtungen miteinander kommunizieren können. Der Standard ITU-T G.992.2 spezifiziert das so genannte Splitterlose ADSL-Verfahren (ADSL lite). Dabei wird auf Bandbreite zu Gunsten eines teilnehmerseitigen Betriebes ohne Splitter verzichtet. Beide Standards behandeln in Anhang A "ADSL über POTS" sowie in Anhang B "ADSL über ISDN". Letzteres wird auch in dem Standard ETSI TS 101 388 V1 genauer spezifiziert, wo auch die Testkriterien in Europa festgelegt werden. Der Standard ITU-T G.992.2 unterstützt den ULC mit maximal 1,536 MBit/s und den DLC bis maximal 5120 kBit/s.

Der Standard ITU-T G.991.2 spezifiziert unterschiedliche SHDSL-Verfahren auf einer oder mehreren Adernpaaren, wie beispielsweise 784 kBit/s, 1.544 kBit/s (T1) und 2.048 kBit/s (E1). Eine adaptive Leitungsanpassung erfolgt bei dieser Verfahrensweise nicht. Alle Schmalbandkanäle sind gleichberechtigt. Primäres Anwendungsszenario ist der Basisanschlussmultiplex (Primärmultiplex) mit Telefoniekanälen.

Der Standard ITU-T G.992.3 spezifiziert das ADSL2- Verfahren. Neuere Technologie erlaubt eine bessere Übertragungsqualität und höhere Übertragungstaten bis ca. 12 MBit/s DLC je nach Leitungsqualität. Der Standard ITU-T G.992.4 spezifiziert das Splitterlose ADSL2- Verfahren. Der Standard ITU-T G.992.5 spezifiziert ADSL 2+, auch ADSL2plus genannt, mit einer erweiterte ADSL- Bandbreite von bis zu 20 MBits/s DLC bei einer Leitungslänge kürzer als 1,5 km und einer maximalen Frequenz von bis zu 2,2 MHz. Weiterhin erlaubt der Standard ITU-T G.992.4 die Verwendung mehrerer Leitungspaare gleichzeitig, so genanntes Bonding, um somit eine Bandbreite von bis zu 40 MBit/s durch Verkettung von Leitungspaaren zu erzielen, die auf der Applikationsebene wie eine einzelne schnelle Datenverbindung erscheinen. ADSL 2++, was auch als ADSL 4 bezeichnet wird, ermöglicht die Übertragung von bis zu 52 MBits/s DLC bei einer erweiterten Frequenznutzung von bis zu 3,75 MHz. Die nutzbare Leitungslänge liegt hier in den meisten Fällen wesentlich unterhalb von 1000 m, meist unterhalb von 500m.

ADSL2 liefert neben der größeren Bandbreite auch Vorteile, wie eine effizientere Modulation, bessere Störmechanismen und beispielsweise eine verkürzte Initialisierungsphase.

ADSL2+ ist mit wesentlich mehr und robusteren Übertragungsverfahren im Vergleich zum "alten" ADSL-Verfahren ausgestattet. Führte beispielsweise eine temporäre Störung auf der Leitung bei ADSL zum Verlust der Synchronisation, musste diese danach zeitaufwändig neu ausgehandelt werden. ADSL2+ kann gestörte Trägerfrequenzen dynamisch ausblenden. Unter Umständen bricht dabei die Bandbreite ein, aber die Verbindung bleibt bestehen. ADSL2+ besitzt eine Reihe gravierender Vorteile gegenüber den Vorläuferversionen.

So ist beispielsweise eine Stromsparfunktion ohne Synchronisationsverlust implementiert, eine Verringerung der Verwaltungsdaten während der Verbindung möglich, wobei die eingesparte Bandbreite den Nutzdaten zur Verfügung stehen. Eine 1-Bit-Modulation auf einem gestörten Kanal bzw. innerhalb eines Frequenzbereichs und eine Reduzierung des Übersprechens durch Leistungsregelung ist in Abhängigkeit des Signal/Rausch-Verhältnisses (Power-Cutback) sowohl für DSLAM wie auch für das ADSL- Modem möglich. Weiterhin sind zusätzliche Redundanzen im Datenstrom vorgesehen, um fehlerhafte Daten besser erkennen zu können. Damit lassen sich Kanäle mit schlechtem Signal/RauschVerhältnis nutzen.

Insbesondere die Stromreduktionsmechanismen sind bei unbenutzten Datenkanälen von Modemstrecken im Dauerbetrieb (Always on) vorteilhaft. Sie reduzieren sowohl den Leistungsverbrauch der Geräte, wie auch die gegenseitige Beeinflussung der Verbindungen innerhalb der Kabel.

Modulationsverfahren und Kanalkapazität bleiben bei den unterschiedlichen Verfahren jeweils erhalten bzw. sind abwärts kompatibel. Schnellere DSL-Verfahren verfügen über mehr Bandbreite und demgemäß über mehr einzelne Übertragungskanäle, können aber auch mit jeder Gegenstelle älterer Spezifikation zusammenarbeiten. Bei neuen Anwendungen kommt in der Regel ADSL2+ zur Anwendung. VDSL2 (Very High Bitrate DSL-2) ist ein technologisch junges Verfahren und baut auf VDSL (Standard ITU-T Rec. G.993.1) auf. ADSL2plus und VDSL2 werden nachfolgend detailliert betrachtet. VDSL ist schaltungstechnisch wie auch funktional allerdings extrem aufwändig, was sich auch in der Kostensituation zeigt.

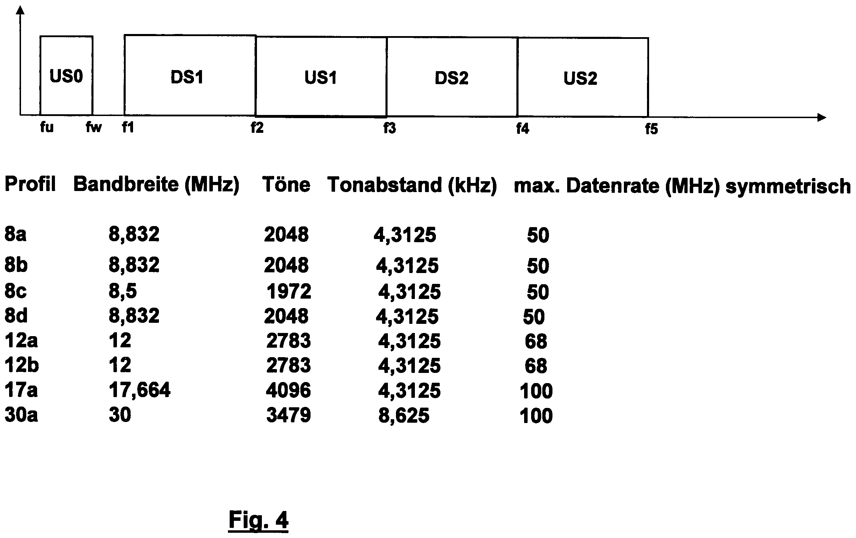

VDSL2 ist in dem Standard ITU-T Rec. G.993.2 spezifiziert und unterstützt asymmetrische und symmetrische Kommunikation mit einer bidirektionalen Nettodatenrate von insgesamt 200 MBit/s bei einer Bandbreite von bis zu 30 MHz und maximal 4096 Übertragungskanälen. G.993.2 verwendet DMT-Modulation und bezieht sich im wesentlichen auf die Spezifikationen G.993.1 (VDSL), G.992.3 (ADSL2) und G.992.5 (ADSL2plus) sowie G.994.1 (Handshake Prozedur). ITU-T Rec. G.993.2 definiert 16 unterschiedliche Übertragungsbänder für Downstream und Upstream Betrieb, die durch den Operator, d.h. den Netzbetreiber, wahlweise verwendet werden können, und hierzu 8 unterschiedliche Profile. Die Profile variieren insbesondere in der Art der Verwendung der unteren POTS-Kanäle, siehe Figur 4. So bezieht sich Anhang A des Standards G.993.2 auf Nordamerika und berücksichtigt einen analogen Basiskanal für Telefonverbindungen. Für den Europäischen Bereich, wo weit verbreitet ISDN zum Einsatz kommt, sind die Spezifikationen gemäß Anhang B vorgesehen sowie für Japan jene in Anhang C (TCM-ISDN DSL). Andere Anwendungen arbeiten optional ohne Telefoniekanal.

Dabei sind unterhalb einer 12 MHZ- Grenze 5 unterschiedliche Bänder spezifiziert, die jeweils in ursächlichem Zusammenhang mit der reservierten Telefon-Bandbreite stehen. Falls gar kein POTS Kanal übertragen wird, beginnt DS1 mit 4 kHz, siehe Fig. 4. Die Reihenfolge der Upload/Download- Bänder sind auch hier vorgegeben, die Frequenzen sind gemäß G.993.2 je nach Zielland in den Anhängen A, B und C enthalten.

Der Frequenzbereich oberhalb 12 MHz steht in Abhängigkeit der Kabelparameter in der wahlweisen Verwendung des Netzbetreibers und ist derzeit noch nicht endgültig spezifiziert.

In der Praxis liegt die erzielbare Datenrate bei ca. 25 MBit/s und maximal 1000m Leitungslänge sowie mit ca. 12,5 MBit/s bei 1500 m Leitungslänge, d.h. in etwa auf ADSL2+ Niveau. Da in der Bundesrepublik Deutschland Teilnehmeranschlussleitungen bis ca. 8 km Leitungslänge vorhanden sind, eignet sich das Verfahren vorzugsweise in Verbindung mit der eingangs beschriebenen FTTC Technik mit Glasfaser- DSLAM innerhalb des Teilnehmeranschlussbereichs, nicht aber für den direkte Teilnehmeranschluss an die Vermittlungsstelle.

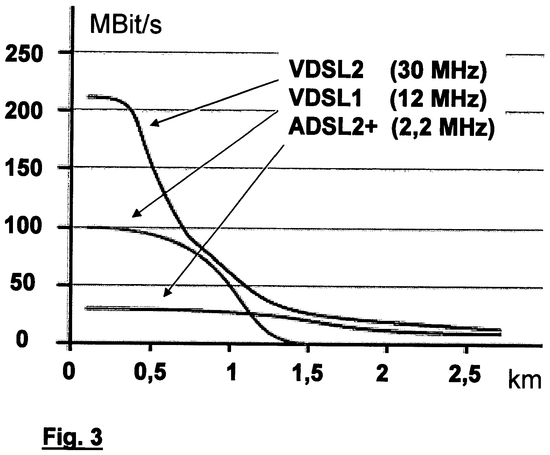

Fig. 3 zeigt beispielhaft die Abhängigkeit der Übertragungsbandbreite von der verfügbaren Länge der Teilnehmeranschlussleitung, d.h. die mit zunehmender Länge auftretende zunehmende Dämpfung bei der Signalübertragung.

Diese Begleiterscheinungen deuten natürlich implizite auf die ortsabhängige Verfügbarkeit und demgemäße Nachteile hin. Man kann davon ausgehen, dass VDSL und VDSL2 nur dort angeboten wird, wo entweder sehr kurze Leitungslängen vorhanden sind, oder genügend Kundenpotential auf kleiner Fläche vorhanden ist, um die teure Glasfaser- und DSLAM- Installation wirtschaftlich zu finanzieren bzw. zu unterhalten.

Für Privatanwender steht auf dem deutschen Markt das unter der Bezeichnung DSL 1000 bekannte Produkt mit einer Download-Datenrate von bis zu 1024 kBit/s zur Verfügung. Allerdings beträgt die Upload-Datenrate dazu nur bis zu 128 kBit/s. Möchte der Kunde einen Upload bis zu 1024 kBit/s verwenden, so muss er auf ein unter der Bezeichnung DSL 16000 bekannte Produkt zurückgreifen, was etwa doppelte Kosten erfordert. Dies ist jedoch auch nur dann möglich, wenn er überhaupt in einem Glasfaser- DSLAM Verfügbarkeitsbereich wohnt, was derzeit noch mit geringer Wahrscheinlichkeit behaftet ist. Damit erhält er dann bis zu 16 MBit/s Download-Kapazität, die er gegebenenfalls nicht benötigt, wenn sein Bedarf möglicherweise nur in einer höheren ULC liegt. Höhere Upload-Raten als 1024 kBit/s stehen ihm aber auch mit DSL 16000 nicht zur Verfügung. Produkte mit höherer Übertragungsrate werden für Privatanwender derzeit nicht angeboten.

Dem Kunden wird allerdings keine feste Bandbreite garantiert, sondern nur ein so genannter "Bandbreitenkorridor". Die maximal erreichbare Geschwindigkeit, mit der das VDSL2-Modem in der Wohnung des Anschlussinhabers mit dem korrespondierenden Modem im (Outdoor-) DSLAM synchronisiert, ist letztlich u.a. vom gewählten Übertragungsdienst, vom Zustand der Kupfer-Anschlussleitung und von der Entfernung zum (Outdoor-) DSLAM abhängig. Auf diese Weise steht auch bei Verwendung eines DSL 16000-Verfahrens oft nur eine deutlich geringere Datenübertragungsrate als die maximal möglichen 16 MBit/s zur Verfügung.

Im Geschäftskundensegment sieht die Betrachtung für den Kunden auf dem deutschen Markt kommerziell noch ungünstiger aus. Während der Geschäftskunde mit dem unter der Bezeichnung "Business 1000" bekannten Produkt mit 1024 kBit/s Download-Datenrate und bis zu 128 kBit/s Upload-Datenrate erwerben kann, steht ihm bei höherem Upload-Bedarf von beispielsweise 1024 kBit/s nur ein Produkt "Business 1000 symmetrisch" zu einem fünffachen Preis gegenüber dem unsymmetrischen Pendant zur Verfügung. Allerdings auch nur bis zu einem Gesamtdatenvolumen von max. 20 GByte. Der Anwender hat daher erheblich höhere Kosten, weil er die gleiche Bandbreite wie bei "Business 1000", allerdings in umgekehrter Richtung, benötigt.
An diesen Zahlen ist zumindest zu erkennen, dass die Erhöhung des UploadGeschwindigkeit für Privat- und Geschäftskunden bei unklarer Verfügbarkeit der Produkte im jeweiligen Anschlussbereich mit wesentlich höheren Kosten verbunden ist, als die einer Download-Datenrate mit vergleichbarer Kapazität.

Der Verbindungsaufbau zwischen ADSL- Modem und Gegenstelle, d.h. DSLAM, erfolgt bei ADSL2+ beispielsweise gemäß der nachfolgend skizzierten Verfahrensweise:
Die Synchronisation der beiden Geräte erfolgt unter Verwendung der Synchronisationskanäle bzw. Pilottöne. ADSL- Teilnehmermodem und DSLAM einigen sich während der Synchronisationsphase zunächst auf ein Übertragungsverfahren, da zu beachten ist, dass unterschiedliche Gerätevarianten nach unterschiedlichem Standard verbunden sein können, und verifizieren sodann die verfügbaren Trägerfrequenzen ohne Telefonkanäle. Im Anschluss daran wird die Anzahl der jeweils pro Kanal codierbaren Bits in Abhängigkeit der Übertragungsmerkmale der Leitungsverbindung getestet. Diese Prüfung kann bei ADSL2+ im laufenden Betrieb wiederholt werden, ohne dass die Verbindung dabei jeweils heruntergefahren werden muss, wie dies bei ADSL noch der Fall war. Die jeweilig ermittelten Parameter werden zwischen den beteiligten Modems ausgetauscht und für den späteren Betrieb abgespeichert.

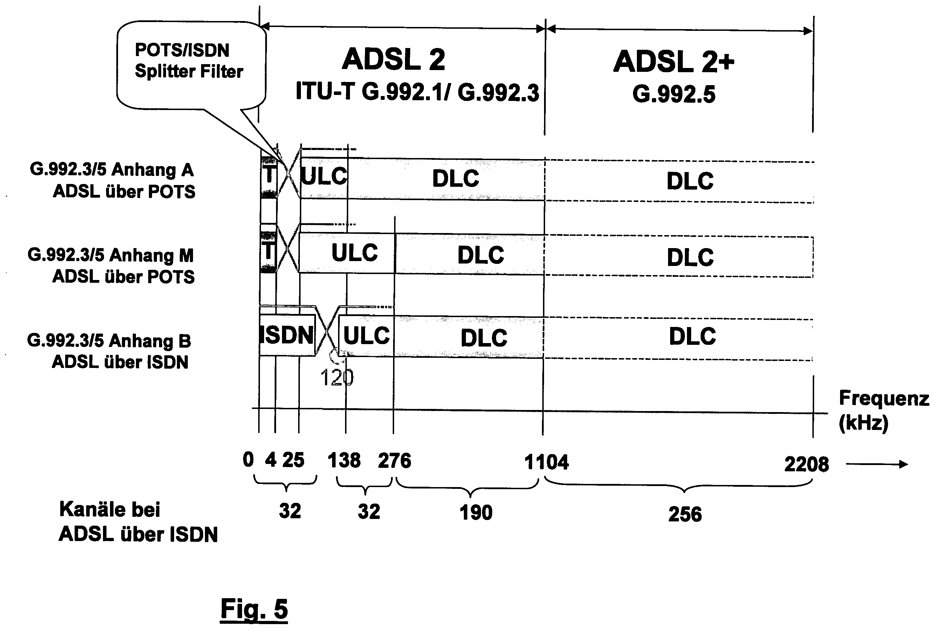

Fig. 5 zeigt schematisch die Verwendung der verfügbaren Bandbreite im Frequenzbereich bei ADSL2 und ADSL2+ für unterschiedliche Telefoniekanäle mit der entsprechenden Referenz zur Standardisierung gemäß ITU-T G.992.3/5 Anhang A, M und B. Im unteren Bereich sind speziell für "ADSL über ISDN" die verfügbaren Datenkanäle angezeigt. In Fig. 5 steht T für Telefonkanal, ULC für Uplinkkanal und DLC für Downlinkkanal.

Bei ADSL2 wird gemäß Fig. 5 das zur Übertragung von Telekommunikationsdaten verwendete Frequenzspektrum von 0 Hz bis 1104 kHz in 256 Übertragungskanäle eingeteilt, wobei jedoch der erste Übertragungskanal 0Hz entspricht und nicht werden kann. Von diesen stehen jedoch für eine Upload-/ Download-Datenübertragung von und zum Internet nicht alle Übertragungskanäle zur Verfügung. Nach dem Standard G.992.3/5 Anhang B, welches ADSL über ISDN spezifiziert, beginnt der für den Upload vorgesehene Frequenzbereich beispielsweise erst bei 138 kHz, was dem Übertragungskanal 33 entspricht. Die unteren Übertragungskanäle sind dabei für Telefonie bzw. Datentransfer via ISDN reserviert. Wie in Fig. 5 dargestellt, werden folglich die Übertragungskanäle 33 bis 64 als Upload-Channels ULC und die Kanäle 65 bis 255 als Download-Channels DLC verwendet. Die Übertragung von Daten mittels ADSL2 erfolgt damit innerhalb eines in 256 Übertragungskanäle unterteilten Frequenzbereichs einer Gesamtbandbreite von 1104 kHz, wobei eine erste Gruppe von Übertragungskanälen, nämlich die Kanäle 33 bis 64 der Upload-Datenübertragung und eine zweite Gruppe von Übertragungskanälen, nämlich die Kanäle 65 bis 255 der Download-Datenübertragung zugeordnet. Die erste Gruppe umfasst dabei 32, die zweite Gruppe 190 Übertragungskanäle, wobei als Summe der Übertragungskanäle beider Gruppen eine Gesamtanzahl von 222 Übertragungskanälen für die Datenübertragung zur Verfügung steht. Bei ADSL2+ ist die zweite Gruppe um weitere 256 Übertragungskanäle erweitert, so dass insgesamt 478 Übertragungskanäle für die Datenübertragung zur Verfügung stehen. Das Frequenzspektrum weist bei ADSL2+ eine Gesamtbandbreite von 2208 kHz auf und wird in 512 Übertragungskanäle unterteilt.

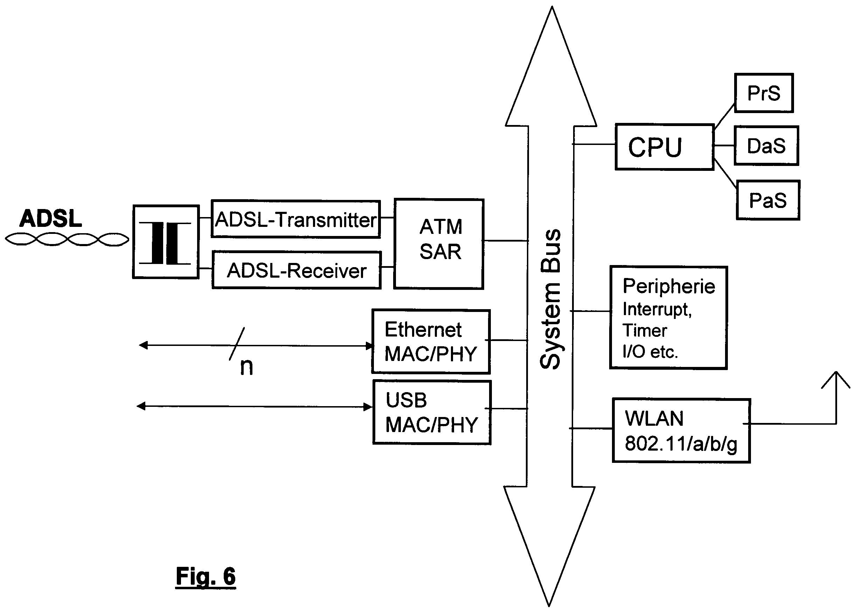

Fig. 6 zeigt schematisch den Aufbau eines ADSL-Modems mit Ethernet Router und WLAN-Funkstation wie er für die ATU-R Installation dem Stand der Technik entspricht. Ein leistungsstarker Prozessor (CPU) verfügt über Programmspeicher (PrS), Datenspeicher (DaS) und Parameterspeicher (PaS). Der PaS dient dabei zur Abspeicherung der Parametrisierungsdaten und Konfigurationsdaten der Geräteschaltung, der angeschlossenen Schnittstellen sowie der ADSL-Verbindung. Die CPU greift auf Peripheriebausteine, wie Interrupt-Steuerung, Timer und Schnittstellenleitungen (I/O) sowie Taktversorgung (nicht eingezeichnet) zurück. Eine ATM-SAR (Asynchroner Transfer Mode - Segment und Reassembly Controller) ist bei der häufig genutzten ATM-Übertragung erforderlich und bildet die ATM-Gegenstelle zum ATM-Netz des Netzbetreibers. Da ATM über festgelegte Kanalstrukturen verfügt, werden bei modernen ADSL-Verfahren gleich mehrere ATM-Strecken parallel übertragen. ADSL-Transmitter (Sender) und Empfänger stellen die eigentliche ADSL-Verbindung zur Verfügung und komplettieren den ATM-SAR. Weitere Schnittstellen ermöglichen den Anschluss üblicher PC-und Datentechnologie. Hier sind insbesondere Ethernet-Schnittstellen anzuführen, wobei die Protokollumsetzung von ATM auf Ethernet vorzugsweise durch den Prozessor erfolgt und die Daten über den System Bus fließen, wobei sie zur Bearbeitung der unterschiedlichen Protokolle und Rahmenstrukturen im DaS zwischengespeichert werden. Bei heutiger Technologie sind meist mehrere Ethernet-Schnittstellen und ein Router vorhanden, damit mehrere PCs an das Gerät ohne zusätzliche Netzwerkhardware angeschaltet werden können. Dies erweist sich insbesondere im häuslichen Bereich als vorteilhaft. USB-Schnittstellen dienen oft der Konfiguration des Gerätes mittels PC, insbesondere jedoch zum direkten Anschluss eines im Netzwerk genutzten Druckers oder einer gemeinsamen Backup-Festplatte (Network-Attached-Storage, NAS). WLAN als Funkschnittstelle vorzugsweise zum Notebook und/oder zum kabellosen Geräteanschluss komplettieren die Funktionalität.

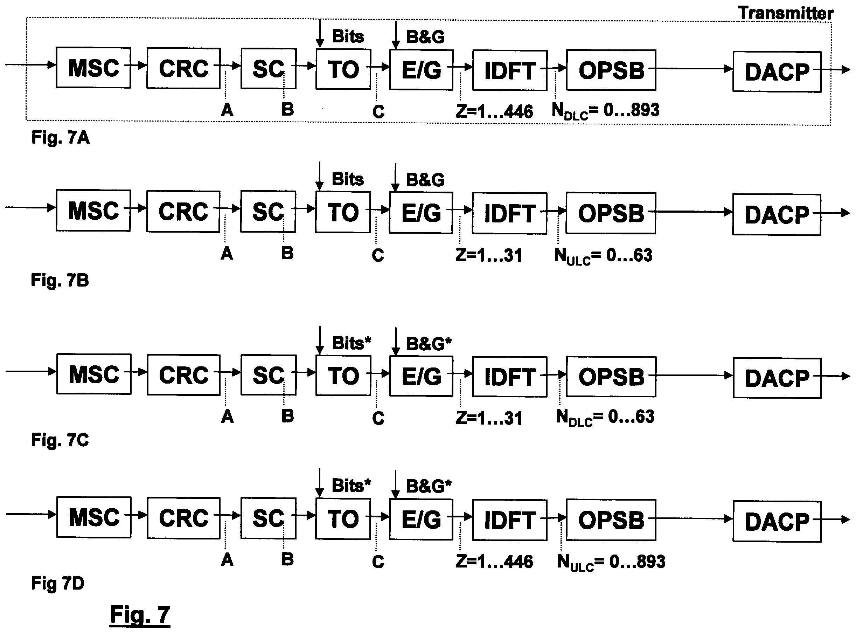

Fig. 7 zeigt schematisch das Transmitter- Referenzmodell für ATM/STM Transport (Asynchronous Transfer Mode, Synchronous Transfer Mode) nach dem Standard ITU-T G.992.1 für sowohl ATU-C, siehe Fig. 7A, wie auch ATU-R, siehe Fig. 7B, sowie die entsprechenden erfindungsgemäßen Ergänzungen/ Modifikationen der Transmitter ATU-C, siehe Fig. 7C, und ATU-R, siehe Fig. 7D.

Die entsprechenden Empfänger sind kompatibel zu der jeweiligen technischen Ausgestaltung der Sender aufzubauen. Die erfindungsgemäße Verfahrensweise wird zunächst in Kombination mit dem ADSL-Standard G. 992.1. erläutert. Im weiteren Text wird auf Besonderheiten höherwertiger ADSL-Verfahren separat eingegangen.

Fig. 7A zeigt den typischen ATU-C Transmitter. Die ATM-Signale des ATM-SAR werden in einer Multiplex-Baugruppe (MSC) zur entsprechenden Rahmenstruktur der DSL-Übertragungstechnik zusammengestellt. Je größer die Übertragungsbandbreite, desto mehr ATM- Verbindungen können einbezogen werden. CRC (Zyklische Redundanz Kontrolle) und SC (Scrambling) dienen der Daten- und Kanalkodierung sowie zur Zusammenstellung der DSL-Rahmenstruktur samt Synchronisationskonstrukten. In der Kanalkontrolle (TO, Tone Ordering) erfolgt die Zuteilung der senderseitigen Übertragungskanäle, d.h. der einzelnen Bits. Im Fall von G. 992.1/.3 (ADSL über ISDN) sind dies die ADSL2- DLC- Kanäle z = 1..190 und bei G.992.5 die ADSL2plus - DLC- Kanäle z = 1..446 im entsprechenden Frequenzbereich, siehe Figur 5.

Die Baugruppe E/G in Fig. 7 (Constellation encoder and gain scaling) ordnet den jeweiligen Übertragungskanälen die entsprechenden individuellen Übertragungsparameter zu, d.h. die Anzahl der übertragenen Bits und Pegelwerte, welche in der inversen diskreten Fourier Transformation (IDFT) vom Frequenzbereich in den Zeitbereich umgesetzt und in der doppelten Anzahl als zeitkontinuierliche Signale zur Verfügung gestellt werden. Der DACP (Digital/Analog Wandler) wandelt die parallelen Signale in einen zeitkontinuierliche seriellen Datenstrom um, puffert diese für die Übertragung und wandelt die digitalen Signale in analoge Signale um, die in der abschließenden Übertragereinrichtung, siehe Fig. 6, in die Teilnehmeranschlussleitung eingekoppelt werden.

Fig. 7B zeigt den ATU-C Transmitter in schematischer Darstellung. Die Anzahl der ATM-Quellen ist gemäß der niedrigeren Datenrate der ULC vergleichsweise geringer, so dass die Multiplex-Einrichtung einfacher aufgebaut sein kann. In der TO werden lediglich die ULC z = 1..32 zugeteilt, was sich in der E/G in einem demgemäß gegenüber ATU-R reduzierten Parametersatz für die 32 Kanäle widerspiegelt. Auch die inverse Fourier Transformation benötigt weniger Rechenleistung und das Schieberegister kann beispielsweise kürzer ausgelegt werden.

Die Verfahrensweise ist für den Download beispielsweise in dem Standard ITU-T G.992.1, Kapitel 7.7, und für Upload in Kapitel 8.7 beschrieben. Dabei werden die Übertragungsparameter für die Kanäle innerhalb der Trainingsphase der Initialisierungsprozedur im Empfänger berechnet und zum Sender übertragen.

Die Parameter werden in Bezug auf die betreffende Frequenz in beiden Modems in einer Tabelle im PaS gespeichert. Die Initialisierungsprozedur ist mit Angabe des Parameteraustausches beispielsweise in Kapitel 10 von ITU-T G.992.1 beschrieben.

ADSL2plus gemäß ITU-T G.992.3 ist im Vergleich komplexer, da dieses Verfahren mehr Kanäle und weitere technische Möglichkeiten bereitstellt. Der entsprechende Transmitter unterscheidet sich im Vergleich zu Fig. 7 nicht in der Schematik der Funktionsblöcke, jedoch insbesondere in der Anzahl der konfigurierbaren Übertragungsparameter der unterschiedlichen Blöcke. So sind hier beispielsweise wegen der dynamisch anpassbaren Bandbreite auch die Multiplex-Einrichtung MSC und der Parallel/Seriell Konverter konfigurierbar. Weiterhin ist die so genannte Latency Pfad Funktion konfigurierbar, welche insbesondere innerhalb der DSL-Rahmenstruktur für besondere zeitkritische Übertragungen zuständig und innerhalb Fig. 7 mit der Scrambling- Funktion (SC) als weniger relevantes Detail zusammengefasst ist.

In der aktuellen Technologie sind nahezu alle Komponenten des ADSL-Modem, siehe Fig. 6, mit den zusätzlichen Schnittstellenfunktionen innerhalb eines einzigen integrierten Schaltkreises oder weniger integrierbarer Schaltkreise integriert. Dabei werden möglichst viele ADSL-Funktionen, die oben als einzelne Funktionsblöcke beschrieben sind, innerhalb eines programmgesteuerten schnellen Signalprozessors zusammengefasst. Die Software-Lösung ermöglicht den Herstellern zum Einen die Beschränkung auf möglichst wenige Komponenten mit hoher Stückzahl und somit die Beschleunigung des Entwicklungsprozesses, zum Anderen ermöglicht diese Lösung einen frühen Markteintritt zu einem Zeitpunkt zu dem die Standards noch nicht endgültig verabschiedet sind und die Produkte noch funktional unvollständig sind, in jedem Fall aber unzureichend getestet und noch fehlerhaft sind. Per Software Download werden später Korrekturen sowie Erweiterungen aus dem Internet in die Bausteine nachgeladen.

Diese Möglichkeit ist für das erfindungsgemäße Verfahren ebenfalls relevant und ermöglicht ein Update vorhandener Modems mit den erfindungsgemäßen Zusätzen bzw. Modifikationen.

Die ADSL2plus-Spezifikation ITU-T G.992.3 sieht in Kapitel 10 unter Dynamic Behaviour (dynamisches Verhalten) u.a. die on-line-reconfiguration (OLR) vor. Diese Betriebsart ermöglicht die dynamische Rekonfiguration, d.h. die Anpassung unterschiedlicher Übertragungsparameter, im laufenden Betrieb. Hintergrund der Verfahrensweise sind insbesondere der hohe Bedarf an elektrischer Verlustleistung (insbesondere im DSLAM), welcher durch die höhere Sendeleistung und die enorme erforderliche Rechenleistung der digitalen Signalprozessoren für die zahlreichen Übertragungskanäle, d.h. durch die Bandbreite, begründet ist, sowie die gegenseitige Beeinflussung der hochfrequenten Übertragungsverfahren im gleichen Kabel, wobei diese Probleme mit der weiteren Kundenakzeptanz, d.h. mit der Anzahl an Übertragungsstrecken im gleichen Kabel zunehmen. Die Verfahrensweise ermöglicht es dabei, Übertragungskapazität eines vorgegebenen Profils im laufenden Betrieb zu reduzieren, wenn weniger Daten übertragen werden müssen oder sollen sowie damit einhergehend die Reduzierung des Stromverbrauchs sowie die Störbeeinflussung, und ohne zeitaufwändige Neusynchronisation wieder bei Bedarf zu aktivieren. Die Verfahrensweise sorgt natürlich für zunehmende dynamische Störungsprofile im gleichen Kabel, weshalb die dynamische Anpassung der Übertragungseigenschaften besonders wichtig ist.

Unter OLR-Verfahren fallen insbesondere das Bit Swapping (BS), welches die Festlegung der Anzahl der kodierten Bits mit den jeweiligen Verstärkungsparametern in Abhängigkeit der dynamischen Leitungseigenschaften des spezifischen Übertragungsfrequenz ermöglicht, die dynamische Datenratenadaption (Dynamic Rate Repartitioning, DRR), die dazu vorgesehen ist, die Rahmenstruktur bzw. Multiplex-Eigenschaften in der ADSL-Übertragung zu verändern, wodurch insbesondere unterschiedliche Latenzzeiten bei der Datenübertragung entstehen, die für unterschiedliche Applikationen erforderlich sind, beispielsweise für Sprachübertragung mit hohen Laufzeitanforderungen, sowie die Anpassung der Datenrate (Seamless Rate Adaption, SRA). SRA ist zur Modifikation der Datenrate durch Reduktion der Übertragungskanäle vorgesehen. Zur Realisierung werden Modulationsverfahren, Kanalzahl und Rahmenstruktur/Multiplex-Verfahren variiert. Zusätzlich wird innerhalb der nicht mehr genutzten Kanäle eine Synchronisation gesendet, was bei ADSL gemäß ITU-T G.992.1 nicht möglich war, wobei die Synchronisation die bedarfsweise Inbetriebnahme der Kanäle später ermöglicht.

Um die hohen Datenraten bei VDSL2 nach G.993.2 über eine Entfernung von bis zu 350 m zur Verfügung stellen zu können, wurde das VDSL2-Spektrum von 12 auf 30 MHz erweitert, die Übertragungsleistung auf 20 dBm erhöht und Techniken zur Echounterdrückung eingesetzt. Dabei steigt naturgemäß die Störbeeinflussung. Leistungsstarke Chipsätze können dabei im DSLAM als 2-Chip-Variante bis zu 48 Fullrate-VDSL2-Ports betreiben. Bei dieser Packungsdichte sind allerdings flexibles Framing und Online-Rekonfigurierung wie SRA, DRR unerlässlich. Bei diesem Komplexitätsgrad und der mannigfaltigen Möglichkeit der Störbeeinflussung ist damit zu rechnen, dass die nutzbare Datenrate bei vielen Anwendungen wesentlich geringer ist, als die theoretische Höchstgrenze, die von den Netzbetreibern angegeben werden. Neuste Forschungen richten sich auf die gegenseitige Störung der VDSL2- Übertragungen im gleichen Kabel, welche bei steigenden Kundenzahlen ebenfalls zunehmen und versuchen die gegenseitigen Störungen durch beispielsweise gekoppelte Strategien innerhalb der Kabel zu reduzieren.

Bei ADSL2 könnten durch gegenseitige Störungen Schwingungsverhalten in den Bandbreiten generiert werden, wenn sich mehrere Übertragungsstrecken im gegenseitigen Einfluss jeweils selbständig auf und ab regeln.

Unterschiedliche Strategien zur Reduzierung der Leistungsaufnahme, insbesondere im DSLAM, sowie zur Störvermeidung, insbesondere die Anpassung der Datenrate durch SRA sowie neue Standby- und Sleep-Modes sind bekannt. Auch ist es bekannt, eine adaptive Bandbreite mit Bandbreitenreduktion bei gegenseitiger Störung benachbarter ADSL-Verbindungen im gleichen Kabel zu verwenden. In die gleiche Richtung zielt die Möglichkeit des Sperrens des unteren Frequenzbandes unterhalb 1,1 MHz. Diese Maßnahme vermeidet insbesondere die Störeinwirkung der hohen ADSL2-Pegel auf benachbarte ADSL-Verbindungen älterer Art mit CAP-Standard und umgekehrt, welche in Nordamerika noch zahlreich vorhanden sind.

ADSL2 ermöglicht durch unterschiedliche logische und oder physikalische Übertragungskanäle die Diensteoptimierung. So bietet beispielsweise die Option CVoDSL (Channelized Voice over DSL) die Benutzung gesonderter Übertragungskanäle für Sprache. Ursache dazu sind die unterschiedlichen Laufzeitbedingungen für IP-Pakete, da sich das IP-Verfahren grundsätzlich schlecht für Sprachübertragung eignet. Die digitale Sprachübertragung erfordert eine zeitkontinuierliche Übertragung der Abtastwerte zur Vermeidung von Aussetzern, und Echo.

Die Anhebung der Übertragungspegel, die sinkende Reichweite, der notwendige Ersatz von Kupfer durch Glasfaserstrecken, erhöhte gegenseitige Störbeeinflussung, Standby- und Sleep- Verfahren, sowie die OLR-Verfahren BS, DRR und SRA, die Frequenzbereichsperrung und andere Maßnahmen repräsentieren den Mehraufwand an Technologie, der durch die höheren Forderungen nach Übertragungsbandbreite und die physikalischen Grenzen entsteht. Die Wahl einer höherwertigen ADSL-Technologie als Lösung für den Bedarf einer höheren Upload-Datenrate ist daher nicht immer die technisch und wirtschaftlich beste Lösung.

Es wurde dargestellt, dass bei den verfügbaren ADSL- Übertragungsverfahren, abgesehen vom wenig verfügbaren und teuren VDSL2-Verfahren, keine Möglichkeit zur Bereitstellung größerer Upload-Datenraten besteht. Da es dem Netzbetreiber bei manchen ADSL-Technologien frei steht, mehrere Übertragungsprofile wahlweise zu verwenden, kann theoretisch ein Modem für unterschiedliche Anwendungsfälle verwendet werden. Nachteilig ist dabei allerdings, dass keine Profile für höhere ULC bei gleich bleibender Gesamtbandbreite einer verfügbaren Technologie standardisiert sind, so dass sich der Anwender eine höhere Upload-Datenrate mit einer ebenfalls höheren, aber gegebenenfalls nicht verwendeten Download-Datenrate erkaufen muss, soweit diese technisch überhaupt im Teilnehmeranschlussbereich verfügbar sind. Eine dynamische Kanalreduktion SRA ist bekannt, dient allerdings der Übertragungsanpassung an unterschiedliche dynamische Störkriterien. Eine dynamische Profilumschaltung im laufenden Betrieb, wo DLCs zu ULCs werden und umgekehrt, ist hingegen nicht offenbart.

Die vorliegende Erfindung stellt eine vergrößerte Upload-Datenrate ohne Vergrößerung der jeweiligen Gesamtbandbreite einer beliebigen DSL-Technologie bereit, insbesondere bei ADSL-Verbindungen wie ADSL, ADSL2, ADSL 2plus und VDSL, ohne dabei zwingende Änderung der jeweiligen technischen Übertragungsverfahren, wie Modulationsart, Quellencodierung und Codereduktion vorzunehmen. Dies wird dadurch erreicht, dass die innerhalb eines ADSL- Standards definierten Übertragungskanäle von beispielsweise 4 kBit/s oder 4,3125 kBit/s etc. jeweils einzeln, wahlweise in Gruppen oder wiederum alternativ gemäß der innerhalb der Standards bisweilen definierten Frequenz- bzw. Kanalbänder wahlweise als Download- (DLC) oder Upload-Kanal (ULC) verwendbar sind und somit durch entsprechende Konfiguration der beiden kommunizierenden Modems höhere ULC bei gleichzeitiger Reduzierung der DLC verfügbar gemacht werden.

Die wahlweise Umschaltung zwischen den Verfahren erfolgt dabei vorzugsweise dynamisch im laufenden Betrieb. Hierzu sind zumindest die Transmitter und Receiver der DSL Modems sowie die Segment und Reassembly Kontroller, die Multiplexer und bedarfsweise die Geräteschnittstellen und Media Access Controller den entsprechenden Bandbreiten gemäß derart zu modifizieren, dass die jeweiligen maximalen Übertragungsbandbreiten bearbeitet werden können und die entsprechenden Parameterspeicher für die gleichzeitige Aufnahme der kompletten Übertragungsparameter und der Modem-Konfigurationsparameter für sowohl DLC, als auch ULC- Verkehr zusammen ausgelegt sind, wobei die Auswahl der entsprechenden Parametersätze durch die zwischen den Modems vereinbarte Betriebsart erfolgt.

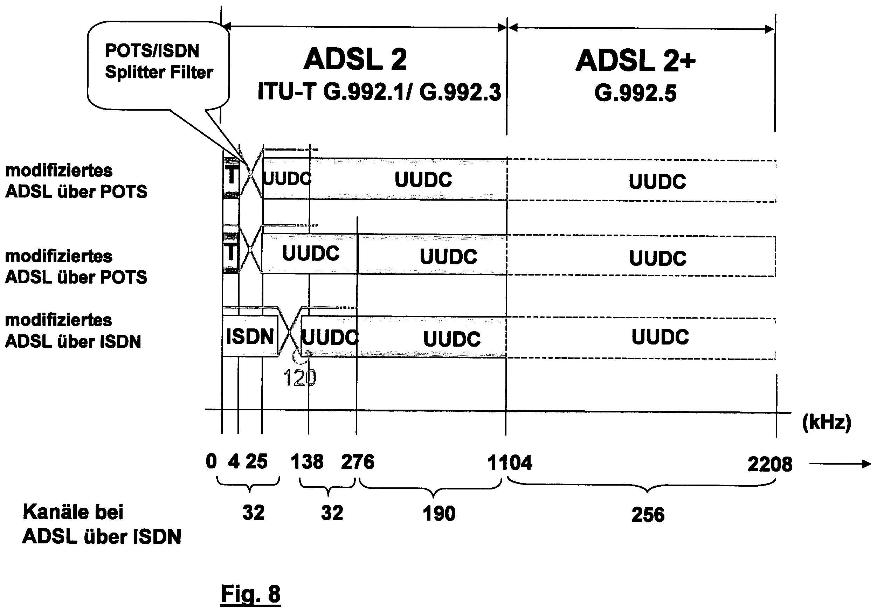

Fig. 5, 7 und 8 veranschaulichen die Verfahrensweise. Im Vergleich zur bisherigen Verfahrensweise fest zugeordneter Übertragungskanäle der ULC und DLC, wie dies in Fig. 5 schematisch dargestellt ist, besitzt das erfindungsgemäß modifizierte Verfahren gemäß Fig. 8 universell nutzbare Kanäle in beiden Datenrichtungen, hier als UUDC gekennzeichnet (Universeller Upload/Download Kanal), welche wahlweise komplett oder alternativ teilweise oder auch einzeln für die eine oder andere Richtung genutzt werden können.

Die komplette Nutzung aller Kanäle in jeweils einer Vorzugsrichtung ist vorzugsweise nicht interessant, da der DSL-Protokollverkehr auch Quittungen etc in Gegenrichtung erfordert. Bedarfsweise kann eine Verkehrsrichtung optional zu Gunsten der Bandbreite in umgekehrter Richtung jedoch soweit möglich auf ein Minimum reduziert werden.

Eine besonders bevorzugte Ausführungsart und zugleich eine leicht überschaubare Variante dieser Verfahrensweise ermöglicht die umgekehrte, inverse Nutzung der vorhandenen Übertragungskanäle. Während beispielsweise bei ADSL über ISDN gemäß Standard ITU-T G.992.1, G.992.3 sowie mit erweiterter Bandbreite gemäß ITU-T G.992.5 nach Anhang B (Fig. 7B) über eine Uplink- Datenrate von ULC= 32 Kanälen (z = 32 mit 138 kBit/s) und eine Downlink-Datenrate DLC gemäß Fig. 7A von maximal 190 + 256 (z = 446 Kanäle mit 1,9 MBit/s) verfügt, können nach Fig. 7D bei umgekehrter Nutzung maximal 1,9 MBit/s ULC und nach Fig. 7C 138 kBit/s DLC sein.

Diese Verfahrensweise ist besonders einfach zu verstehen und bei unterschiedlichen DSL-Verfahren zu implementieren und wird im weiteren Text mit DRP-ADSL (Dynamik Reverse Profile ADSL) bezeichnet.

Prinzipiell sind bei der Anwendung auf ADSL2+ insgesamt 2,38 MBit/s Summenübertragungsrate mit beliebiger Aufteilung realisierbar, wobei optional auch unterschiedliche dynamische oder statische Profile realisierbar sind, beispielsweise für downloadlastigen Verkehr, für uploadlastigen Verkehr sowie für symmetrischen Verkehr, z.B. bei Video- oder Sprachanwendungen.

Wenn das/die alternative/n Übertragungsprofil/e innerhalb der kommunizierenden Modems abgespeichert ist/sind, reicht eine einzige Steuersequenz zum Umschalten zwischen den Verfahren aus. Die Auswahl und Initiierung der Übertragungsprofile kann wahlweise von Netzbetreiber oder Kunde veranlasst werden, wobei der Netzbetreiber bei der Hardware/Software-Implementierung bestimmte Restriktionen der verwendbaren Profile und/oder der Umschaltmöglichkeiten vorgeben kann. Auf der Teilnehmerseite bieten sich wahlweise die manuelle Profilumschaltung, d.h. durch den Benutzer veranlasste Umschaltung, oder die automatische Umschaltung, z.B. durch die Betriebssoftware des Modems oder durch eine Applikationssoftware an, wobei im letztgenannten Fall beispielsweise automatisch je nach anstehender Applikation, d.h. Download, Upload, Sprachanwendung etc., fallspezifisch entschieden werden kann, indem beispielsweise je nach aktuellem Online-Betriebsverhalten und eingeschaltetem Dienst eine automatische Bewertung von Echtzeitverhalten und/oder Datenaufkommen in beiden Verkehrsrichtungen durchgeführt wird und auf Basis vorgegebener Prioritäten und/oder Verfahrensregeln eine der vorgegebenen Übertragungsprofile automatisch ausgewählt wird. Diese Verfahrensweise kann permanent, zeitweise, einmalig beim Anschalten der Hardware oder beim Laden neuer Software oder beim Ändern von Kommunikationsverhalten aktiv werden, beispielsweise wenn neue Programme oder Treiber geladen werden.

Da weder Kanalzahl, noch Kodierungsverfahren etc. der bestehenden DSL-Verfahren mit der erfindungsgemäßen Verfahrensweise geändert werden, bleibt der technologische Aufwand vergleichbar. Bei kompletter Hardwarerealisierung sind die erforderlichen Komponenten zur Behandlung der zusätzlichen Transportmöglichkeiten gemäß Fig. 7 komplett zu realisieren. Dazu kommt bedarfsweise noch eine Erweiterung der ATM SAR, da nunmehr sowohl in ULC wie auch in DLC die maximale Bandbreite vorgehalten werden muss, obwohl sie lediglich wahlweise entweder oder verwendet wird. DSL-Modems, welche vorzugsweise mit schnellen digitalen Signalprozessoren DSP aufgebaut sind und über eine Programmsteuerung verfügen, können hingegen ohne zusätzliche Hardwaremittel erfindungsgemäß erweitert werden, da die gesamte Rechenleistung sich an der Gesamtbandbreite und nicht an der Übertragungsrichtung orientiert. Diese Modems können mit einer entsprechenden modifizierten Ablaufsteuerung ausgerüstet werden, wobei zusätzlich allerdings mehr Speicher für Konfigurations- und Parameterspeicher PaS zur Verfügung stehen muss. Manche Geräte sind mit zur Sicherheit ab Werk bereits mit überzähligem Speicher ausgerüstet, andere können bei gesockelten Speicherbausteinen im Feld nachgerüstet werden.

Eine wiederum alternative Realisierungsvariante verzichtet auf erweiterten PaS und führt nach dem Umschalten der Übertragungsverfahren jeweils eine Neuinitialisierung mit Trainingsphase durch. Insbesondere bei ADSL2plus und Modems mit begrenztem Parameterspeicher PaS könnte diese Verfahrensweise interessant sein, da hier besonders umfangreiche Parameterlisten erforderlich sind, die Schaltung vorzugsweise in DSP-Technik mit Programmsteuerung ausgelegt ist (Standard vor Auslieferung noch unvollständig) und die Neuinitialisierung in wenigen Sekunden durchführbar ist (Fast Startup). Dadurch könnte insbesondere der Privatkunde bei kostenneutraler Einbringung der erfindungsgemäßen ADSL-Übertragungsverfahren in sein vorhandenes Modem profitieren und den Verzicht der dynamischen Umschaltung verschmerzen.

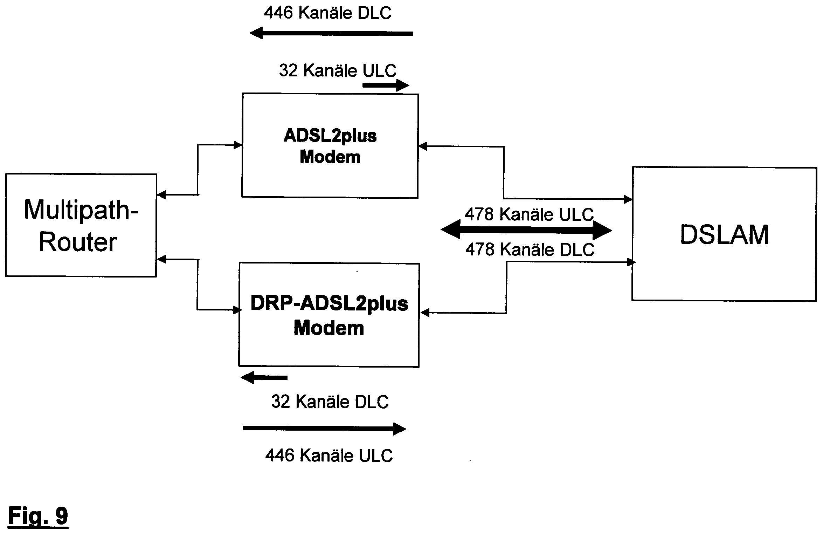

Werden permanent hohe symmetrische Datenraten benötigt, können auch optional zumindest zwei ADSL-Strecken mit jeweils einem ADSL-Modem parallel in Kombination an einem Multipath-Router betrieben werden, siehe Fig. 9, wobei zumindest eine der ADSL-Strecken im erfindungsgemäßen DRP-ADSL-Mode betrieben wird. Bei dieser Verfahrensweise stehen bidirektional bei einem DSL 1000 Produkt jeweils 1,152 MBit/s, bei DSL 2000 jeweils 2.240 MBit/s, bei DSL 6000 jeweils 6.592 MBit/s und bei DSL 16000 jeweils 17.1024 MBit/s zur Verfügung. Auch im Kostenvergleich ergeben sich dadurch erhebliche Einsparungen. Werden beide Modems im DRP-ADSL-Mode betrieben, so stehen folgende Datenraten jeweils maximal alternativ zur Verfügung: 2 x DSL 1000 mit ULC/DLC = 2048 kBit/s, 2 x DSL 2000 mit ULC/DLC = 4098 kBit/s, 2 x DSL 6000 mit ULC/DLC = 12.032 kBit/s und 2 x DSL 16.000 mit ULC/DLC = 32.000 kBit/s.

Im Sinne dieser Erfindung wird daher ein DSL-Verfahren mit variabler Upload-/ Downloadbitrate und applikationsspezifischer, dynamischer Profilumschaltung, abgekürzt VUDB-DSL, vorgeschlagen, welches zukünftige und bestehende DSL-Verfahren, wie beispielsweise ADSL, ADSL2, ADSL 2plus, VDSL etc. unter Beibehaltung der jeweiligen Gesamtbandbreite sowie der spezifischen Modulations-und Kodierungsverfahren derart erfindungsgemäß modifiziert, dass die gemäß üblicher Standardisierung bisweilen unidirektionalen Übertragungskanäle bzw. Frequenzbereiche, die entweder für Upload-Verkehr ULC oder Download-Verkehr DLC vorgesehen sind/werden, nun erfindungsgemäß teilweise oder vorzugsweise alle als universelle ULC/DLC Datenkanäle (UUDC Universelle Upload Download Kanäle), d.h. Frequenzbereiche, wahlweise als einzelne Übertragungskanäle bzw. Übertragungsfrequenzen, Kanalgruppen bzw. Frequenzgruppen oder in kompletten Kanalbändern bzw. Frequenzbändern vorzugsweise im laufenden Verkehr dynamisch für Upload- oder Download-Verkehr umschaltbar sind, siehe Figur 8. Innerhalb der Modems müssen dabei die funktionalen Voraussetzungen für die jeweils maximale Datenübertragungsraten in beiden Richtungen vorhanden sein, was wahlweise als Hardwarerealisierung oder alternativ mittels schnellem Digitalem Signalprozessor und entsprechender Programmsteuerung oder wahlweise gemischt realisiert werden kann.

Die funktionalen Erweiterungen bestehen insbesondere im modifizierten Segment und Reassembly Kontroller für ATM/SDH- Schnittstellen, vgl. Fig. 6, sowie insbesondere in erweiterten Modem-Komponenten von Transmitter (Sender) und Receiver (Empfänger). Die Modifizierung betrifft transmitterseitig zumindest die Funktionseinheiten IDFT und OPSB, sowie die Parameter-Zuordnung von Bits und B&G sowie insbesondere erweiterte Speichermöglichkeiten, die für die entsprechend der aufwändigeren Kanalnutzung nun ebenfalls umfangreichere Übertragungsparameter und Konfigurationsparameter erforderlich sind, und die beispielsweise den doppelten Umfang annehmen können, wenn die Kanäle alle jeweils in beiden Richtungen universell nutzbar gemacht werden.

Bei dem DSL-Verfahren mit universellen Upload-/Downloadkanälen und Applikationsspezifischer Dynamischer Profilumschaltung kann ferner die Initialisierungsphase der Modems gegenüber der üblichen Verfahrensweise derart optional erweitert werden, dass alle Kanäle, welche wahlweise als DLC oder ULC verwendet werden, in beiden Übertragungsrichtungen innerhalb einer entsprechenden Trainingsphase vermessen und die entsprechenden Übertragungsparameter, insbesondere die kanalspezifischen Dämpfungs-, Modulations- und Verstärkungsparameter, zur späteren Verwendung im PaS abgespeichert werden, wodurch eine verzögerungsfreie Umschaltung zwischen den unterschiedlichen Übertragungsprofilen im laufenden Betrieb ermöglicht wird.

Bei dem erfindungsgemäßen DSL-Verfahren kann die Umschaltung zwischen den Übertragungsprofilen netzseitig (Netzbetreiber) oder wahlweise teilnehmerseitig (Kunde) jeweils manuell oder wahlweise automatisch erfolgen, wobei eine bevorzugte Ausführungsart die automatisch initiierte teilnehmerseitige Profilumschaltung beispielsweise durch die Betriebssoftware oder Applikationssoftware vorsieht. Die Profilumschaltung richtet sich dabei nach den anstehenden Kommunikationsaufgaben. Es wird eine automatische Bewertung von Echtzeitverhalten und/oder Datenaufkommen in beiden Verkehrsrichtungen durchgeführt und auf Basis vorgegebener Prioritäten und/oder Verfahrensregeln eine demgemäß optimierte ULC/DLC -Kanalaufteilung selbständig gewählt. Diese Verfahrensweise kann permanent, zeitweise, einmalig beim Anschalten der Hardware oder beim Laden neuer Software oder wahlweise beim dynamischen Ändern von Kommunikationsverhalten des Teilnehmers aktiviert oder in Betrieb sein, beispielsweise auch wenn neue Programme oder Treiber geladen werden, oder Download-, Upload-, bzw. Sprachanwendung etc. anstehen.

Es kann darüber hinaus eine Begrenzung der Kanalaufteilungsmöglichkeiten auf sinnvolle festgelegte Profile vorgesehen werden, deren Umschaltung mit kurzer Befehlsfolge zwischen den beteiligten Modems erfolgen kann. Technologisch einfach ist es dabei, eine Vertauschung der Upload- und Download-Frequenzbänder unter Beibehaltung der POTS- Kanäle vorzunehmen, was als Dynamic Reverse Profile ADSL bezeichnet werden kann. Diese Verfahrensweise besitzt das übliche DLClastige ADSL- Übertragungsprofil (High Download Profil HDP) sowie das erfindungsgemäß umgekehrte ULC-lastige Profil (High Upload Profil HUP), zwischen denen in einfacher Weise dynamisch hin und her geschaltet werden kann und welches optional durch ein symmetrisches Profil für beispielsweise Sprach- und Bildtelefonie, Peer-to-Peer-Rechnerkopplung etc. ergänzt werden kann (Symmetrisches Profil SP).

Auf die Vorhaltung der kompletten Übertragungs- und Konfigurationsparameter innerhalb der Modems für beide Übertragungsrichtungen kann optional verzichtet werden, wenn hierdurch beispielsweise Kosten- oder Nachrüstvorteile entstehen, wobei die entsprechenden Parameter bei dieser Verfahrensweise bei jeder Profil- oder Kanalumschaltung jeweils durch Test der Streckeneigenschaften neu ermittelt werden, oder alternativ aus einem extern auf Teilnehmer- und/oder Netzseite vorhandenen Speichereinrichtung geladen werden.

Besonders vorteilhaft ist bei dem vorgeschlagene Verfahren, dass eine dynamische Bandbreitenaufteilung in beiden Verkehrsrichtungen optional innerhalb von Netzknoten und Vermittlungseinrichtungen an beliebiger Stelle des Übertragungs-und Vermittlungsnetzes des Netzbetreibers, zwischen den Netzbetreibern sowie des Internet Backbone eingesetzt werden kann, um dynamisch auf unterschiedliches Verkehrsverhalten reagieren zu können, d.h. die Übertragungswege adaptiv dem Verkehrsaufkommen anzupassen, ohne das kostspielige Überkapazitäten für zumindest eine der Verkehrsrichtungen vorgeleistet werden müssen.

Weiterhin ist ein besonderer Vorteil der Erfindung, dass sie zur Realisierung von hohem Upload-Verkehr oder hohem symmetrischem Verkehr die Verwendung mehrerer, zumindest aber zwei DSL-Modems mit DSL-Strecken im Anschluss an zumindest einen Multipath-Router mit Lastteilung ermöglicht, siehe Fig. 9, wobei zumindest eine der ADSL-Strecken im erfindungsgemäßen VUDB-ADSL-Verfahren bzw. im DRP-ADSL-Verfahren betrieben wird.

Zusammenfassend sieht die vorliegende Erfindung, insbesondere bei ADSL-Verbindungen, welche über getrennte Upload- und Download- Kanäle bzw. Frequenzbänder in DMT-Technik verfügen, die Ausbildung universeller Upload/Download-Kanäle UUDC (Universal Upload Download Chanel) vor, die wahlfrei in jeder Verkehrsrichtung genutzt werden können. Die Auswahl und Umschaltung von Kanälen und Verkehrsrichtung erfolgt dynamisch im laufenden Betrieb vorzugsweise automatisch, je nach anstehender Applikation und entsprechendem Verkehrsbedarf, d.h. Internet-Download, Mail-Upload, Sprachanwendungen, Videokonferenz, IP-TV etc. Eine besonders vorteilhafte Variante kann als DLC-ADSL (Dynamic Reverse Profile ADSL) bezeichnet werden. Sie besteht aus dem Übertragungsprofilen HDP (High Download Profil), d.h. einem Übertragungsprofil, das dem normalen ADSL-Verfahren mit schnellem Download und langsamem Upload entspricht, sowie dem umgekehrten, inversen Profil HUP (High Upload Profil), d.h. einem Übertragungsprofil mit einem schnellen Upload und langsamen Download, wobei zwischen den Übertragungsprofilen mit einfacher Befehlsfolge umgeschaltet werden kann. Eine sinnvolle Ergänzung bildet ein symmetrisches Profil (Symmetrisches Profil SP) für beispielsweise Sprach- und Bildtelefonie oder Peer-to-Peer-Rechnerkopplung.

Durch das erfindungsgemäße Verfahren können Übertragungsstrecken besser ausgelastet und Überkapazitäten verhindert werden, da Verkehrsspitzen in einer Richtung über freie Übertragungskanäle der jeweils anderen Richtung geleitet werden, die nunmehr für diese Zwecke in ihre Übertragungsrichtung bidirektional verwendbar sind.

Abkürzungen in den Figuren
- MSC: Multiplexer, Synchronisation, Kontrolle
- CRC: Zyklische Redundanz Kontrolle
- SC: Scrambling/ Interleaving
- TO: Kanalkontrolle
- E/G: Encoder und Verstärker
- IDFT: Inverse diskrete Fourier Transformation
- OPSB: Ausgangs Parallel/Seriell Konverter und Puffer
- DACP: Digital/Analog Wandler und Analog Verarbeitung
- A,B,C,Zi: Referenzpunkte nach ITU-T G.992.1
- Bits*: Kanalzuteilung erweitert
- B&G*: Übertragungsparameter erweitert
- ATM: Asynchroner Transfer Mode
- SAR: Segment und Reassembly Kontroller
- MAC: Media Access Kontroller
- PHY: Physikalische Schnittstelle
- PrS: Programmspeicher
- DaS: Datenspeicher
- PaS: Parameterspeicher
- USB: Universeller serieller Bus

## Patentansprüche

1. Verfahren zur Anpassung von Upload- und Download- Datenübertragungsrate einer bestehenden DSL- Verbindung zwischen einem teilnehmerseitigen Modem und einer Gegenstelle einer Vermittlungsstelle, bei der die gesamte Übertragungsbandbreite verwendet wird, wobei die Datenübertragung innerhalb eines in Übertragungskanäle unterteilten Frequenzbereichs einer bestimmten Gesamtbandbreite erfolgt und eine erste Gruppe von konsekutiv oder beliebig angeordneten Übertragungskanälen der Upload-Datenübertragung und eine weitere Gruppe von ebenfalls konsekutiv oder beliebig angeordneten Übertragungskanälen der Download-Datenübertragung zugeordnet ist und die Summe der Übertragungskanäle beider Gruppen der Gesamtanzahl der für die Datenübertragung zur Verfügung stehenden Übertragungskanäle entspricht, **dadurch gekennzeichnet, dass** die Anzahl der Übertragungskanäle der beiden Gruppen unter Beibehaltung der Gesamtbandbreite der DSL-Verbindung in Abhängigkeit einer aktuell benötigten Upload- und/ oder Download-Datenübertragungsrate verändert wird, wobei die Anpassung der Upload-Datenübertragungsrate dynamisch im laufenden Betrieb erfolgt.

2. Verfahren nach Anspruch 1, **dadurch gekennzeichnet, dass** die Upload-Datenübertragungsrate der ersten Gruppe durch Hinzunahme von Übertragungskanälen aus der zweiten Gruppe erhöht wird.

3. Verfahren nach Anspruch 1 oder 2, **dadurch gekennzeichnet, dass** die Anpassung durch Vertauschen der Anzahlen der Übertragungskanäle der beiden Gruppen oder durch Invertieren der jeweiligen Transportrichtung erfolgt.

4. Verfahren nach einem der vorherigen Ansprüche, **dadurch gekennzeichnet, dass** die Anpassung zum Erhalt einer symmetrischen Datenübertragungsrate durch Zuordnung gleicher Anzahlen von Übertragungskanälen der beiden Gruppen erfolgt.

5. Verfahren nach einem der vorherigen Ansprüche, **dadurch gekennzeichnet, dass** die Anpassung zum Erhalt einer symmetrischen Datenübertragungsrate durch Zuordnung der jeweils erforderlichen Anzahlen von Übertragungskanälen der beiden Gruppen erfolgt, wobei die Anzahl der jeweils verwendeten Übertragungskanäle mit der individuellen Übertragungskapazität der einzelnen Übertragungskanäle in Relation gesetzt wird und die gesamte Übertragungskapazität der jeweiligen Übertragungsrichtung dabei gleich ist.

6. Verfahren nach einem der vorherigen Ansprüche, **dadurch gekennzeichnet, dass** die Anzahl, Anordnung und Verwendung der Übertragungskanäle bevorzugter Verkehrsvarianten in zumindest einem Übertragungsprofil definiert wird, wobei die Anpassung der Upload- und Download-Datenübertragungsrate durch Umschaltung von einem ersten Übertragungsprofil auf ein weiteres Übertragungsprofil erfolgt.

7. Verfahren nach Anspruch 6, **dadurch gekennzeichnet, dass** vordefinierte Übertragungsprofile in den Modems abgespeichert sind und die Umschaltung durch Austausch einer Steuersequenz erfolgt.

8. Verfahren nach einem der Ansprüche 6 oder 7, **dadurch gekennzeichnet, dass** auf Basis vorgegebener Prioritäten und/oder Verfahrensregeln eines der Übertragungsprofile ausgewählt wird.

9. Verfahren nach einem der vorherigen Ansprüche, **dadurch gekennzeichnet, dass** die Anpassung der Upload-Datenübertragungsrate automatisch teilnehmerseitig durch die Betriebssoftware des Modems, eine Applikationssoftware des Anwenders, das Betriebssystem, eine Anwendungssoftware, oder ein Treiber seines Computers oder der Datenendeinrichtung, oder netzseitig durch den Netzbetreiber erfolgt.

10. Verfahren nach einem der vorherigen Ansprüche, **dadurch gekennzeichnet, dass** eine Bewertung des Echtzeitverhaltens und/oder des Datenaufkommens der Datenübertragung in beiden Verkehrsrichtungen durchgeführt wird und eine Anpassung der Upload-Datenübertragungsrate in Abhängigkeit dieser Bewertung vorgenommen wird.

11. Verfahren nach Anspruch 10, **dadurch gekennzeichnet, dass** die Bewertung des Echtzeitverhaltens und/oder des Datenaufkommens der Datenübertragung permanent oder zeitweise erfolgt.

12. Verfahren nach einem der vorherigen Ansprüche, **dadurch gekennzeichnet, dass** die Anpassung der Upload-Datenübertragungsrate beim Starten und/ oder Beenden einer Applikationssoftware, einer Anwendung der Applikationssoftware und / oder eines Treibers erfolgt.

13. Verfahren nach einem der vorherigen Ansprüche, **dadurch gekennzeichnet, dass** innerhalb einer Initialisierungsphase der Modems die bidirektional verwendbaren Übertragungskanäle jeweils in beide Übertragungsrichtungen vermessen werden und demgemäß ermittelte Übertragungsparameter in zumindest einem Modem abgespeichert werden.

14. Verfahren nach Anspruch 13, **dadurch gekennzeichnet, dass** als Übertragungsparameter die kanalspezifischen Dämpfungs-, Modulations- und/ oder Verstärkungsparameter gemessen werden.

15. Verfahren nach einem der vorherigen Ansprüche, **dadurch gekennzeichnet, dass** die automatische Bandbreitenanpassung der Übertragungskanäle in Abhängigkeit des Verkehrsaufkommens in beiden Verkehrsrichtungen durchgeführt wird.

## Claims

1. Method for adapting the upload and download data transmission rate of an existing DSL connection between a subscriber modem and a remote station of a switching centre, in which the total transmission bandwidth is used, data being transmitted within a frequency range of a particular total bandwidth, which frequency range is subdivided into transmission channels, and a first group of transmission channels which are arranged consecutively or in any desired manner being assigned to the upload transmission of data, and a further group of transmission channels which are likewise arranged consecutively or in any desired manner being assigned to the download transmission of data, and the sum of transmission channels in both groups corresponding to the total number of transmission channels available for transmitting data, **characterized in that** the number of transmission channels in the two groups is changed, while retaining the total bandwidth of the DSL connection, on the basis of a currently required upload and/or download data transmission rate, the upload data transmission rate being dynamically adapted during ongoing operation.

2. Method according to Claim 1, **characterized in that** the upload data transmission rate of the first group is increased by adding transmission channels from the second group.

3. Method according to Claim 1 or 2, **characterized in that** the adaptation is carried out by swapping the numbers of transmission channels in the two groups or by inverting the respective transport direction.

4. Method according to one of the preceding claims, **characterized in that** the adaptation is carried out by assigning identical numbers of transmission channels in the two groups in order to obtain a symmetrical data transmission rate.

5. Method according to one of the preceding claims, **characterized in that** the adaptation is carried out by assigning the respectively required numbers of transmission channels in the two groups in order to obtain a symmetrical data transmission rate, the number of respectively used transmission channels being related to the individual transmission capacity of the individual transmission channels, and the total transmission capacity of the respective transmission direction being the same in this case.

6. Method according to one of the preceding claims, **characterized in that** the number, arrangement and use of the transmission channels of preferred traffic variants are defined in at least one transmission profile, the upload and download data transmission rate being adapted by changing over from a first transmission profile to a further transmission profile.

7. Method according to Claim 6, **characterized in that** predefined transmission profiles are stored in the modems and the changeover is carried out by swapping a control sequence.

8. Method according to either of Claims 6 and 7, **characterized in that** one of the transmission profiles is selected on the basis of predefined priorities and/or method rules.

9. Method according to one of the preceding claims, **characterized in that** the upload data transmission rate is automatically adapted at the subscriber end by the operating software of the modem, application software belonging to the user, the operating system, application software or a driver of his computer or of the data terminal, or at the network end by the network operator.

10. Method according to one of the preceding claims, **characterized in that** the real-time behaviour and/or the data volume in the transmission of data in both traffic directions is/are assessed and the upload data transmission rate is adapted on the basis of this assessment.

11. Method according to Claim 10, **characterized in that** the real-time behaviour and/or the data volume in the transmission of data is/are permanently or occasionally assessed.

12. Method according to one of the preceding claims, **characterized in that** the upload data transmission rate is adapted when starting and/or terminating application software, an application of the application software and/or a driver.

13. Method according to one of the preceding claims, **characterized in that** the transmission channels which can be used in a bidirectional manner are each measured in both transmission directions within an initialization phase of the modems and accordingly determined transmission parameters are stored in at least one modem.

14. Method according to Claim 13, **characterized in that** the channel-specific attenuation, modulation and/or gain parameters are measured as transmission parameters.

15. Method according to one of the preceding claims, **characterized in that** the automatic bandwidth adaptation of the transmission channels is carried out on the basis of the traffic volume in both traffic directions.

## Revendications

1. Procédé destiné à adapter un débit de chargement ascendant et descendant de données d'une connexion DSL existante, entre un modem chez un abonné et un poste distant d'un central, lors duquel on utilise la bande passante de transmission totale, le chargement de de données s'effectuant dans une gamme de fréquence divisée en canaux de transmission d'une certaine bande passante totale et un premier groupe de canaux de transmission placés de manière consécutive ou de manière quelconque étant affectés au chargement ascendant de données et un autre groupe de canaux de transmission également placés de manière consécutive ou de manière quelconque étant affectés au chargement descendant de données et la somme des canaux de transmission des deux groupes correspondant au montant total des canaux de transmissions disponibles pour la transmission de données, **caractérisé en ce qu'**on modifie le nombre des canaux de transmission des deux groupes en conservant la bande passante totale de la connexion DSL en fonction d'un débit de chargement ascendant et/ou descendant de données, l'adaptation du chargement ascendant de données s'effectuant de manière dynamique, en service actif.

2. Procédé selon la revendication 1, **caractérisé en ce qu'**on augmente le débit de chargement ascendant de données du premier groupe par addition de canaux de transmission du deuxième groupe.

3. Procédé selon la revendication 1 ou 2, **caractérisé en ce que** l'adaptation s'effectue par échange des nombres des canaux de transmission des deux groupes ou par inversion de la direction de transport respective.

4. Procédé selon l'une quelconque des revendications précédentes, **caractérisé en ce que** l'adaptation pour obtenir un débit de chargement de données symétrique s'effectue par affectation de nombres identiques de canaux de transmissionn des deux groupes.

5. Procédé selon l'une quelconque des revendications précédentes, **caractérisé en ce que** l'adaptation pour obtenir un débit de chargement de données symétrique s'effectue par affectation des nombres respectivement nécessaires de canaux de transmissionn des deux groupes, le nombre des canaux de transmission respectivement utilisés étant mis en relation avec la capacité de transmission individuelle des canaux de transmission isolés et à cet effet, l'ensemble de la capacité de transmission de la direction de transmission respective étant identique.

6. Procédé selon l'une quelconque des revendications précédentes, **caractérisé en ce que** le nombre, la disposition et l'utilisation des canaux de transmission de variantes de trafic préférentielles sont définis dans au moins un profil de transmission, l'adaptation du débit de chargement ascendant et descendant de données s'effectuant par commutation d'un premier profil de transmission sur un autre profil de transmission.

7. Procédé selon la revendication 6, **caractérisé en ce que** des profils de transmission prédéfinis sont mémorisés dans le modem et la commutation s'effectue par échange d'une séquence de commande.

8. Procédé selon l'une quelconque des revendications 6 ou 7, **caractérisé en ce que** sur la base de priorités et/ou de règles de procédé prédéfinies, l'un des profils de transmission est choisi.

9. Procédé selon l'une quelconque des revendications précédentes, **caractérisé en ce que** l'adaptation du débit de chargement ascendant de données s'effectue automatiquement chez l'abonné par le logiciel d'exploitation du modem, un logiciel d'application de l'utilisateur, le système d'exploitation, un logiciel d'application ou un driver de son ordinateur ou du terminal de données ou côté réseau par le fournisseur de réseau.

10. Procédé selon l'une quelconque des revendications précédentes, **caractérisé en ce qu'**une évaluation du comportement en temps réel et/ou du volume de données duchargement de données est réalisée dans les deux directions de trafic et il est procédé à une adaptation du débit de chargement ascendant de données, en fonction de ladite évaluation.

11. Procédé selon la revendication 10, **caractérisé en ce que** l'évaluation du comportement en temps réel et/ou du volume de données du chargement de données s'effectue en permanence ou de temps en temps.

12. Procédé selon l'une quelconque des revendications précédentes, **caractérisé en ce que** l'adaptation du débit de chargement ascendant de données s'effectue à l'ouverture et / ou à la fermeture d'un logiciel d'application, d'une application du logiciel d'application et/ou d'un driver.

13. Procédé selon l'une quelconque des revendications précédentes, **caractérisé en ce que** dans une phase d'initialisaton du modem, les canaux de transmission utilisables de manière bidirectionnelle sont mesurés respectivement dans les deux directions de transmission et des paramètres de transmission déterminés en conséquence sont mémorisés dans au moins un modem.

14. Procédé selon la revendication 13, **caractérisé en ce qu'**en tant que paramètres de transmission on mesure les paramètres d'atténuation, de modulation et/ou d'amplification spécifiques aux canaux.

15. Procédé selon l'une quelconque des revendications précédentes, **caractérisé en ce que** l'adaptation automatique de la bande passante des canaux de transmission est réalisée en fonction du volume du trafic dans les deux directions de trafic.
